(19) Europäisches Patentamt
European Patent Office
Office européen des brevets

(11) **EP 3 292 374 B1**

(12) **FASCICULE DE BREVET EUROPEEN**

(45) Date de publication et mention
de la délivrance du brevet:
**03.04.2019 Bulletin 2019/14**

(51) Int Cl.:
*G01B 11/00* (2006.01)  *G01S 3/782* (2006.01)
*G01S 5/16* (2006.01)  *G01C 11/00* (2006.01)
*A63H 27/133* (2006.01)  *G05D 1/02* (2006.01)
*G05D 1/10* (2006.01)  *G06K 9/00* (2006.01)
*G06K 9/32* (2006.01)

(21) Numéro de dépôt: **16720830.5**

(22) Date de dépôt: **04.05.2016**

(86) Numéro de dépôt international:
**PCT/EP2016/059999**

(87) Numéro de publication internationale:
**WO 2016/177781 (10.11.2016 Gazette 2016/45)**

(54) **SYSTÈME DE DÉTECTION D'UNE CIBLE CONTRASTÉE**

SYSTEM ZUR DETEKTION EINES KONTRASTIERTEN TARGETS

SYSTEM FOR DETECTING A CONTRASTED TARGET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2015 FR 1554051**

(43) Date de publication de la demande:
**14.03.2018 Bulletin 2018/11**

(73) Titulaires:
• **Centre National de la Recherche Scientifique (CNRS)**
**75016 Paris (FR)**
• **Universite d'Aix Marseille**
**13284 Marseille Cedex 07 (FR)**

(72) Inventeurs:
• **VIOLLET, Stéphane**
**13600 Ceyreste (FR)**
• **RUFFIER, Franck**
**13008 Marseille (FR)**
• **MANECY, Augustin**
**82200 Moissac (FR)**
• **DIPERI, Julien**
**13127 Vitrolles (FR)**

(74) Mandataire: **Hautier, Nicolas**
**Cabinet Hautier**
**20, rue de la Liberté**
**06000 Nice (FR)**

(56) Documents cités:
**WO-A1-2005/111536   US-A1- 2009 127 430**

• **FABIEN COLONNIER ET AL: "A small-scale hyperacute compound eye featuring active eye tremor: application to visual stabilization, target tracking, and short-range odometry", BIOINSPIRATION & BIOMIMETICS, INSTITUTE OF PHYSICS PUBLISHING, BRISTOL, GB, vol. 10, no. 2, 25 février 2015 (2015-02-25), page 26002, XP020282554, ISSN: 1748-3190, DOI: 10.1088/1748-3190/10/2/026002 [extrait le 2015-02-25]**
• **FREDERIC L ROUBIEU ET AL: "A novel 1-gram insect based device measuring visual motion along 5 optical directions", 2011 IEEE SENSORS PROCEEDINGS : LIMERICK, IRELAND, 28 - 31 OCTOBER 2011, IEEE, PISCATAWAY, NJ, 28 octobre 2011 (2011-10-28), pages 687-690, XP032093358, DOI: 10.1109/ICSENS.2011.6127157 ISBN: 978-1-4244-9290-9**
• **MURA F ET AL: "Obstacle avoidance in a terrestrial mobile robot provided with a scanning retina", INTELLIGENT VEHICLES SYMPOSIUM, 1996., PROCEEDINGS OF THE 1996 IEEE TOKYO, JAPAN 19-20 SEPT. 1996, NEW YORK, NY, USA,IEEE, US, 19 septembre 1996 (1996-09-19), pages 47-52, XP010209708, DOI: 10.1109/IVS.1996.566350 ISBN: 978-0-7803-3652-0**

**Description**

DOMAINE TECHNIQUE DE L'INVENTION

La présente invention concerne un procédé et un système de détection (en hyperacuité) d'une cible contrastée et un système d'acquisition et de poursuite d'une telle cible. Elle reçoit pour application particulièrement avantageuse le positionnement de drones ou de robots sur une cible.

ÉTAT DE LA TECHNIQUE

L'acquisition optique est un élément essentiel au développement de la robotique moderne. L'intérêt aujourd'hui n'est plus uniquement de disposer de robots dans des usines pour effectuer des tâches répétitives mais bien d'avoir des robots en extérieur aptes à se déplacer de manière autonome et à effectuer des tâches précises.
Il est donc nécessaire que le robot puisse se repérer dans l'environnement dans lequel il évolue de manière très précise. A cette fin, disposer de système d'acquisition d'image est un élément essentiel pour le développement futur de la robotique.
De plus cette acquisition visuelle doit être la plus précise possible, une solution permettant d'obtenir un capteur d'images à très haute résolution consiste à associer un capteur à haute densité de cellules photosensibles à une optique adéquate. Outre un encombrement important cette solution présente un coût très élevé et requiert une relativement grande capacité de calcul pour traiter les signaux fournis par ce grand nombre de cellules photosensibles. De plus un tel système s'appuie sur la haute résolution de son capteur, et la perte de certaines cellules photosensibles entrainerait très vite un disfonctionnement du système.
Une autre solution consiste à déplacer un capteur d'image par micro- pas de déplacement, sous-multiples de l'espacement entre les cellules photosensibles de ce dernier, et à reconstituer une image finale à partir des images partielles acquises à chaque micro-déplacement. Une telle solution implique l'utilisation d'une mémoire de stockage de grande capacité, ainsi qu'un algorithme de reconstruction d'image particulièrement performant, et donc coûteux en termes de temps et de ressources de calcul. D'autres systèmes expérimentaux ont en outre été proposés. Ce type de système met en oeuvre un capteur CCD et un algorithme de traitement d'image pour en extraire l'horizon avec une précision convenable. Toutefois, un tel système exige une luminance élevée et requiert une puissance de calcul importante, ce qui encore limite son utilité pour des systèmes autonomes.
Plus récemment, une technique de détection par un oeil électronique, soumis à un balayage par translation relative de l'optique du dispositif par rapport à la cible permet la détection d'un bord contrasté sensiblement rectiligne. Ce type de capteur permet de déterminer la position angulaire d'un contraste présentant un bord sensiblement rectiligne, au moyen de deux cellules photosensibles décalées spatialement, auxquelles on impose un balayage translatif. Une telle technique est décrite dans le document WO2005/111536 A1. Un tel capteur réalise une détection selon une direction uniquement, selon une dimension. La localisation unidimensionnelle est limitative pour un système autonome évoluant en extérieur dans un environnement tridimensionnel. De plus la mise en oeuvre de ces solutions pour un balayage bidimensionnel est complexe, couteux en énergie et en volume.
La présente invention a pour objectif de proposer une solution ne présentant pas les inconvénients précités et permettant une identification au moins en deux dimensions d'une cible contrastée.

RÉSUMÉ DE L'INVENTION

Selon un premier aspect, la présente invention concerne un système de détection d'une cible contrastée présentant au moins une zone de contraste sensiblement rectiligne dans au moins une direction déterminée. Ce système de détection, tel que défini par la revendication indépendante 1, est caractérisé en ce que :

- il comporte au moins un premier et un deuxième dispositifs optiques, appelé oeil, comprenant chacun :

  ◦ au moins une optique présentant un plan focal et un axe optique perpendiculaire à son plan focal et passant par un centre optique et
  ◦ au moins un capteur optique comprenant au moins une pluralité de cellules photosensibles ; ladite au moins une pluralité de cellules photosensibles étant positionnée par rapport à ladite au moins une optique de manière à ce que les rayons lumineux, de préférence tous les rayons lumineux, transmis par ladite au moins une optique soient reçus par ladite au moins une pluralité de cellules photosensibles ;

- les optiques des premier et deuxième dispositifs optiques sont solidaires entre elles et sont supportées par un premier support;

- les au moins un capteur optique sont solidaires entre eux et sont supportés par un deuxième support ;
- le premier support et le deuxième support sont configurés pour être entraînés en rotation relative l'un par rapport à l'autre.
- ladite rotation relative est effectuée selon un axe de rotation parallèle à l'axe optique de chacune des optiques, l'axe de rotation étant différent de l'axe optique de chacune des optiques ;
- un unique actionneur est configuré pour générer ladite rotation relative ;
- l'angle de balayage de ladite rotation relative et la distance entre le centre optique des au moins une optique de chaque oeil et l'axe de rotation de ladite rotation relative sont configurés de manière à ce que pour chacun des au moins deux capteurs optiques, au fur et à mesure de ladite rotation, le centre optique de l'optique associée au capteur optique effectue un balayage, c'est-à-dire passe chacun successivement au regard, d'une pluralité de cellules photosensibles du capteur optique ;
- les au moins deux yeux sont positionnés par rapport audit axe de rotation de manière à ce que ledit balayage du centre optique des au moins une optique soit effectué selon une première direction pour l'au moins un premier oeil et selon une deuxième direction, différente de la première direction, pour l'au moins un deuxième oeil.

Ainsi, le présent système de détection permet une détection au moins bidimensionnelle d'une cible contrastée bidimensionnelle. De manière avantageuse, le découplage mécanique des deux supports permet la mise en mouvement de l'un par rapport à l'autre de sorte à réaliser un balayage des cellules photosensibles par le centre optique des optiques. Les capteurs optiques des yeux étant solidaires et compris par le deuxième support, et les optiques des yeux étant également solidaires et comprises par le premier support, le mouvement relatif du premier support par rapport au deuxième support implique un mouvement relatif des optiques par rapport aux capteurs optiques.

Ce mouvement relatif étant une rotation relative entre un premier support comprenant les optiques et un deuxième support comprenant les capteurs optiques, il en résulte un balayage optique du centre optique des optiques selon des directions différentes pour chacun des yeux du système de détection. Ainsi tout ou au moins l'essentiel de la rotation périodique sert à balayer les capteurs. On optimise ainsi la durée de travail des capteurs pour chaque mouvement oscillant.

De manière avantageuse, les yeux de la présente invention ne sont pas disposés sur une même droite passant par le centre de rotation. Ainsi la rotation relative des optiques par rapport aux capteurs optiques consiste en un balayage optique selon au moins deux direction différentes permettant un balayage optique bidimensionnel. De préférence, mais de manière non obligatoire, les yeux sont disposés sur un même cercle centré sur le centre de rotation. Avantageusement, un seul et unique actionneur, commun aux au moins deux yeux, est configuré pour générer ladite rotation. L'utilisation d'un unique actionneur permet d'accroître la fiabilité mécanique du dispositif, sa compacité, de diminuer sa consommation énergétique et de rendre parfaitement synchrone le mouvement relatif des optiques par rapport aux capteurs optiques.

Par conséquent, l'invention évite d'avoir à recourir à un système complexe de synchronisation des mouvements des capteurs qui effectuent des balayages selon des directions différentes.

Selon un autre aspect, la présente invention concerne un appareil mobile selon au moins deux directions spatiales comprenant un système de détection selon la présente invention et configuré pour ajuster sa position suivant au moins les deux directions spatiales en fonction d'une détection opérée par ledit système de détection. Avantageusement, les au moins deux directions spatiales sont orthogonales entre elles.

La présente invention permet à un tel appareil de se déplacer selon les aux moins deux directions en fonction de sa position relative par rapport à une cible contrastée en utilisant le système de détection de la présente invention.

Un autre aspect de la présente invention concerne un drone comprenant au moins un système de détection selon la présente invention et configuré pour ajuster sa position spatiale en fonction d'une détection opérée par ledit système de détection

De manière avantageuse, la présente invention s'applique à des appareils volants de type drones configurés pour évoluer dans les trois dimensions en fonction de leur position relative par rapport à une cible contrastée. Le faible encombrement de la présente invention, ainsi que sa faible consommation énergétique apportent des avantages considérables pour les véhicules autonomes volants de type drones. Un autre aspect de la présente invention concerne un robot mobile comprenant au moins un système de détection selon la présente invention et configuré pour ajuster sa position spatiale en fonction d'une détection opérée par ledit système de détection

De manière avantageuse, la présente invention s'applique à des robots mobiles de type robot motorisé équipé de chenilles pas exemple configurés pour évoluer dans deux dimensions en fonction de leur position relative par rapport à une cible contrastée. Le faible encombrement de la présente invention, ainsi que sa faible consommation énergétique apportent des avantages considérables pour les véhicules autonomes de ce type.

Un autre aspect de la présente invention concerne un ensemble comprenant au moins un appareil, ou un drone, ou un robot, selon la présente invention, et au moins une cible contrastée, l'appareil, ou le drone, ou le robot, étant configuré pour ajuster sa position spatiale en fonction de sa position relative par rapport à la cible contrastée détectée par ledit système de détection. De manière avantageuse, la cible contrastée sert de point de repère à l'appareil de sorte qu'il peut se guider à partir de sa position relative par rapport à la cible contrastée calculée par le système de détection.

Selon un autre exemple non revendiqué, la présente invention concerne un procédé de calibration d'un système de détection selon la présente invention, par rapport à une cible contrastée comprenant au moins un contraste, ledit procédé étant caractérisé en ce qu'il comprend les étapes suivantes mises en oeuvre par ordinateur :

- selon un mode de réalisation optionnel, calcul d'un signal de sortie normalisé de chaque cellule photosensible pour chaque dispositif optique ;
- Sélection pour chaque dispositif optique, d'une paire de cellules photosensibles adjacentes dont le signal de sortie S, de préférence normalisé, est maximum par rapport au signal de sortie S des autres paires de cellules photosensibles adjacentes du dispositif optique ;
- Filtrage du signal de sortie S de chaque paire de cellules photosensibles pour chaque dispositif optique, selon un mode de réalisation optionnel, en fonction du signal de sortie S maximum sélectionné ;

et en ce qu'il comprend les étapes suivantes :

- Pour une pluralité de positions connues du système de détection par rapport au contraste, enregistrement de la dite position connue et du signal de sorti S filtré de chaque paire de cellules photosensibles pour chaque dispositif optique correspondant à ladite position connue.
- Génération d'une table de correspondance entre la position connue du système de détection par rapport au contraste et le signal de sortie S filtré de chaque paire de cellules photosensibles pour chaque dispositif optique correspondant à ladite position connue.

Selon un autre aspect, la présente invention concerne un procédé de calibration d'un système de détection selon la présente invention, par rapport à une cible contrastée comprenant au moins un contraste. Ce procédé, tel que défini par la revendication indépendante 14, comprend les étapes suivantes mises en oeuvre par ordinateur :

- Détermination d'une pluralité de paires de cellules photosensibles adjacentes pour chaque dispositif optique;
- Filtrage d'un signal de sortie S de chacune desdites paires de cellules photosensibles;

le procédé comprenant également les étapes suivantes :

- Pour une pluralité de positions connues du système de détection par rapport au contraste, enregistrement de la dite position connue et du signal de sortie S filtré de chacune desdites paires de la pluralité de paires de cellules photosensibles adjacentes correspondant à ladite position connue c'est-à-dire obtenu pour ladite position connue.
- Génération d'une table de correspondance entre la position connue du système de détection par rapport au contraste et le signal de sortie S filtré de chacune desdites paires de la pluralité de paires de cellules photosensibles adjacentes correspondant à ladite position connue.

Le procédé de calibration permet avantageusement de ne pas dépendre de la configuration intrinsèque des cellules photosensibles et de réaliser une table de correspondance pour chaque oeil en fonction de chaque cible. Cette table de correspondance permet une augmentation importante de l'acuité de détection de la présente invention. Avantageusement, dans ce procédé de calibration, toutes les paires de cellules photosensibles adjacentes pour chaque dispositif optique sont prises en compte dans l'étape de sélection de la paire de cellules photosensibles adjacentes dont le signal de sortie S, de préférence normalisé, est maximum par rapport au signal de sortie S des autres paires de cellules photosensibles adjacentes du dispositif optique.

Selon un autre exemple non revendiqué, la présente invention concerne un procédé de détermination de la position d'un système de détection selon la présente invention, par rapport à une cible contrastée comportant un contraste, en utilisant une table de correspondance générée par le procédé de calibration selon la présente invention, caractérisé en ce qu'il comprend les étapes suivantes mises en oeuvre par ordinateur :

- Mesure du signal de sortie S filtré de chaque paire de cellules photosensibles pour chaque dispositif optique ;
- Lecture dans la table de correspondance de la position du système de détection par rapport au contraste correspondant audit signal S filtré et mesuré.

L'utilisation d'une table de correspondance permet d'accroitre la fiabilité de la présente invention dans la détermination de la position du système de détection par rapport à une cible contrastée.

Selon un autre aspect, la présente invention concerne également un procédé de détermination de la position d'un système de détection selon la présente invention, par rapport à une cible contrastée comportant un contraste, en utilisant une table de correspondance générée par le procédé de calibration selon la présente invention, le procédé, tel que défini par la revendication indépendante 15, comprenant les étapes suivantes mises en oeuvre par ordinateur :

- Détermination d'une pluralité de paires de cellules photosensibles adjacentes pour chaque dispositif optique;
- Filtrage d'un signal de sortie S de chacune desdites paires de la pluralité de paires de cellules photosensibles adjacentes;

le procédé comprenant également les étapes suivantes :

- Mesure d'un signal de sortie S filtré de chacune des paires de la pluralité de paires de cellules photosensibles adjacentes;
- Lecture dans la table de correspondance de la position du système de détection par rapport au contraste correspondant audit signal S filtré et mesuré.

Selon un autre exemple non revendiqué, la présente invention concerne un procédé de détermination de la position angulaire relative d'un appareil ou d'un drone ou d'un robot, selon la présente invention, par rapport à une cible contrastée, ledit procédé étant caractérisé en ce qu'il comprend les étapes suivantes :

- la détermination de l'angle de lacet en utilisant l'ensemble des dispositifs optiques ayant dans leur champ de vision la cible contrastée ;

  - la détermination d'un premier dispositif optique identifié comme étant le mieux aligné avec la cible contrastée ;
  - la détermination des angles de roulis et de tangage en utilisant les dispositifs optiques aptes à détecter la cible contrastée selon des directions spatiales différentes de celle dudit premier dispositif optique déterminé.

Ce procédé permet la détermination des coordonnées de position relative du système de détection par rapport à une cible contrastée. A partir de ces coordonnées, l'appareil comprenant ce système de détection peut ajuster sa position suivant ses paramètres internes de programmation de sorte à pouvoir, par exemple, se positionner d'une manière particulière par rapport à la cible contrastée.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

- la FIGURE 1a représente la situation d'un drone autonome inspectant par exemple un pipeline comportant des stations de recharge par induction.
- La FIGURE 1b représente un drone sur une station de recharge par induction.
- Les FIGURES 2a et 2b représentent un dispositif optique, selon un exemple de mode de réalisation de la présente invention, comportant 4 yeux disposés en croix.
- Les FIGURES 3a et 3b représentent un dispositif optique, selon un mode de réalisation de la présente invention, comportant 4 yeux disposés en croix et un unique actionneur.
- Les FIGURES 4a à 4k illustrent des exemples de cibles contrastées et des balayages optiques de ce type de cibles.
- Les FIGURES 5a et 5b illustrent, selon un mode de réalisation de la présente invention, un exemple de capteur selon l'invention comprenant la pluralité de cellules photosensibles comprise dans un oeil.
- Les FIGURES 6a à 6d illustrent la géométrie optique d'un exemple d'oeil de la présente invention, selon un mode de réalisation, en mode statique et en situation d'un mouvement de l'optique par rapport au capteur optique.
- Les FIGURES 7a et 7j illustrent, selon un mode de réalisation de la présente invention, le traitement des signaux optiques mesurés par un oeil selon la présente invention.
- Les FIGURES 8a et 8b illustrent deux algorithmes, selon un mode de réalisation de la présente invention, de traitement des signaux optiques.
- La FIGURE 9 illustre un mode de réalisation de la présente invention.
- Les FIGURES 10a et 10b illustrent un second mode de réalisation de la présente invention.

- Les FIGURES 11a et 11b illustrent un mode de réalisation de la présente invention adapté à des robots mobiles.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entrer dans le détail de modes de réalisation préférés notamment en référence aux figures, on énonce ci-après différentes options que peut préférentiellement mais non limitativement présenter l'invention, ces options pouvant être mises en oeuvre, soit séparément, soit suivant toute combinaison entre elles :

- Avantageusement, la présente invention est configurée de manière à ce que ladite rotation relative comprenne un mouvement de rotation oscillant de préférence périodique.
Ce mouvement oscillant périodique permet de moduler l'illumination, le balayage des cellules photosensibles de sorte à générer un signal modulé en sortie de capteurs optiques propre à chaque cellule photosensible. Cette modulation permet ainsi de diminuer le bruit de mesure. De plus cette oscillation périodique assure une mesure répétée et ainsi plus précise de la cible se trouvant dans le champ de vision de chaque oeil, c'est-à-dire de chacun des dispositifs optiques.

- Avantageusement, les dimensions et la configuration des dispositifs optiques, en particulier la dimension des cellules photosensibles et la distance entre l'axe de rotation relative et le centre optique de l'au moins une optique sont configurées de manière à ce que chaque capteur optique perçoivent le balayage comme un mouvement de translation.
Cette perception de mouvement de translation relative permet de définir une direction précise de balayage dans un espace tridimensionnel.

- Avantageusement, la présente invention est configurée de manière à ce que la relation qui relie la distance R entre ledit axe de rotation relative et le centre optique de l'au moins une optique, avec la distance d' parcouru par le centre optique et avec la distance d séparant deux cellules photosensibles adjacentes de la pluralité de cellules photosensibles, lors du balayage d'un capteur optique par ledit centre optique, est exprimée par l'équation suivante :

$$d' = R\tan\left(\frac{d}{R}\right)$$

Et dans lequel R >> d, avantageusement R > k.d avec k=10 et de préférence k=100, de manière à ce que d' ≈ d. Ainsi l'amplitude du balayage est très faible au regard de la distance entre le centre de rotation de ce balayage. Ainsi, au niveau de chaque capteur, ce mouvement oscillant périodique de rotation peut être approximé par une translation oscillante périodique.

- Avantageusement, le rapport entre :

  - la longueur du rayon défini par la distance entre le centre de rotation du système de détection autour dudit axe de rotation au centre optique de l'au moins une optique et
  - la longueur du capteur optique associé audit dispositif optique, la longueur étant mesurée selon une direction perpendiculaire à une droite passant par l'axe de rotation et par un centre du capteur optique;
  est supérieur à 10 et de préférence supérieur à 100.

Ainsi la longueur d'un capteur est faible devant le rayon de système de détection. Cela permet à chaque capteur optique de percevoir le mouvement de rotation comme un mouvement de translation

- Avantageusement, l'actionneur est un moteur à excentrique configuré pour générer ladite rotation relative comprenant un mouvement de rotation oscillant de préférence périodique.
Cela permet de générer un mouvement oscillant périodique en utilisant un seul actionneur et en le faisant fonctionner sans aller-retours. Typiquement on utilise un moteur dont un arbre de sortie tourne dans un seul sens et qui est couplé à un dispositif à excentrique pour transformer la rotation continue de l'arbre de sortie du moteur pour générer un mouvement de rotation oscillant.

De ce fait, l'usure de l'actionneur est amoindrie et sa longévité de fonctionnement augmentée.

Par ailleurs, l'utilisation d'un seul actionneur assure une synchronicité des balayages entre tous les yeux d'un même système de détection.

- Avantageusement, pour au moins un dispositif optique, la pluralité de cellules photosensibles est positionnée en dehors du plan focal de la au moins une optique.

  Ainsi, la au moins une pluralité de cellules photosensibles n'est pas positionnée dans le plan focal de la au moins une optique.

  Cela permet de générer un flou gaussien et de permettre un filtrage spatial de sorte à éliminer les plus fins détails.

- Avantageusement, la présente invention est configurée pour que les rayons lumineux reçus par la pluralité de cellules photosensibles présentent une distribution gaussienne de leur intensité lumineuse.

  Cette distribution gaussienne de l'intensité lumineuse permet un filtrage spatial de sorte à être moins sensibles aux détails les plus fins.

- Avantageusement, les dispositifs optiques sont répartis autour d'un cercle ou sur un anneau centré sur l'axe de rotation.

  La configuration en anneau du système de détection de la présente invention permet de disposer tous type d'équipement au centre du système de détection optique.

- Avantageusement, le système comprend un dispositif d'enregistrement vidéo positionné au centre du cercle ou du disque sur lequel sont répartis les dispositifs optiques.

  La configuration en anneau du système de détection de la présente invention permet de disposer une caméra de haute résolution au centre de sorte de pouvoir effectuer des tâches précises avec le système de détection et d'autres tâches précises avec la caméra de haute résolution.

- Avantageusement, le nombre de dispositifs optiques est compris entre 1 et 1000, avantageusement entre 2 et 500, et de préférence égal à 4, et dans lequel les dispositifs optiques sont uniformément répartis autour d'un cercle dont le centre est l'axe de rotation de ladite rotation.

  Cela permet d'effectuer des balayages optiques selon des directions différentes de sorte à pouvoir réaliser un balayage bidimensionnel une fois que les signaux de chaque oeil sont fusionnés.

  Avantageusement, l'angle formé par une première droite passant par le centre optique d'un premier dispositif optique et le centre de rotation et par une deuxième droite passant par le centre optique d'un deuxième dispositif optique et le centre de rotation est supérieure à 45°. Cet angle est de préférence sensiblement égal à 90°. Ainsi, les au moins deux yeux sont configurés de manière à ce que ledit balayage du centre optique des optiques soit effectué selon deux directions sensiblement perpendiculaires.

  L'optique associée à chaque capteur est typiquement une lentille.

- Avantageusement, lorsque le nombre de dispositifs optiques est égal à 2, ceux-ci sont répartis autour d'un cercle dont le centre est l'axe de rotation de ladite rotation, avec un écart angulaire entre chaque dispositif optique compris entre 0° et 360°, avantageusement entre 45° et 270°, et de préférence égal à 90°.

  Le positionnement à 90° du second dispositif optique dans le cas de deux yeux permet une optimisation de l'acuité du détecteur puisque ainsi l'écart angulaire entre les deux directions balayées est maximal, c'est-à-dire que le balayage s'effectue selon deux directions perpendiculaires, permettant ainsi une meilleure appréciation de la cible.

- Avantageusement, toutes les cellules photosensibles des dispositifs optiques sont balayées.

  Cette maximisation du nombre de cellules photosensibles balayées permet un accroissement de la précision de la mesure optique.

  De préférence, les optiques des dispositifs optiques sont solidaires entre elles et sont comprises dans un même premier plan.

  De préférence, lesdits capteurs des dispositifs optiques sont solidaires entre eux et sont supportés par le deuxième support en étant compris dans un même deuxième plan.

  Avantageusement, l'angle de balayage et la distance entre le centre optique des au moins une optique de chaque oeil et l'axe de rotation de ladite rotation relative sont conformées de manière à ce que pour chacun des au moins deux capteurs optiques, au fur et à mesure de ladite rotation, le centre optique de chacune des au moins une optique effectue un balayage, caractérisé par un angle de balayage, successif des au moins une pluralité de cellules photosensibles de chacun des au moins deux capteurs optiques. Avantageusement, les au moins deux yeux sont configurés de manière à ce que ledit balayage du centre optique des au moins une optique soit effectué selon une première direction pour l'au moins un premier oeil et selon une deuxième direction, différente de la première direction, pour l'au moins un deuxième oeil.

- Avantageusement, une distance sépare l'axe de rotation des axes optiques.
Cette distance permet un balayage des capteurs optiques par les lentilles par simple rotation du support des lentilles autour de l'axe de rotation du système de détection.

- Avantageusement, le nombre de cellules photosensibles comprise dans chacun des au moins un capteur optique est compris entre 1 et 1000, avantageusement entre 2 et 500, et de préférence égal à 5.
Plus le nombre de cellules photosensibles est important et plus grande est la précision de mesure.

- Avantageusement, toutes les cellules photosensibles des au moins une pluralité de cellules photosensibles sont balayées en un seul mouvement.
Cela permet de maximiser la précision de mesure.

- Avantageusement, l'angle de balayage de ladite rotation relative est inférieur ou égal à l'angle défini par une première droite passant d'une part par l'axe de rotation et par une cellule photosensible disposée à une première extrémité du capteur optique et par une deuxième droite passant d'une part par l'axe de rotation et par une cellule photosensible disposée à une deuxième extrémité du capteur optique.
Ainsi le centre optique de l'optique est en permanence située au regard du capteur optique. Le centre optique ne se déplace pas au-dessus d'une zone non couverte par le capteur optique.
Cela permet de ne pas balayer plus que la zone comprenant les cellules photosensibles de sorte à optimiser le mouvement mécanique et ainsi de ne pas dépenser de l'énergie de manière inutile.

- Avantageusement, ledit angle de balayage est compris entre 1 $\Delta\phi$ et 2 $\Delta\phi$, avantageusement égal à 1 $\Delta\phi$, où $\Delta\phi$ correspond à l'angle formé par les deux axes optiques de deux cellules photosensibles adjacentes.
En tout état de cause, on balaye au moins une cellule photosensible.
De plus, ces paramètres physiques sont avantageux afin de pouvoir approximer un mouvement de rotation relative du centre optique des optiques par un mouvement de translation relative dudit centre optique au niveau des cellules photosensible.
Selon un autre mode de réalisation alternatif et de manière surprenante, ledit angle de balayage peut être compris entre 0.1 $\Delta\phi$ et 2 $\Delta\phi$. En effet, il a été observé de manière surprenante que pour un angle de balayage inférieur à 1 $\Delta\phi$, la présente invention peut tout de même être mise en oeuvre et permettre la détection d'une cible contrastée par exemple.

- Avantageusement, ledit mouvement de translation est effectué selon des directions différentes pour chacun des dispositifs optiques.
Cela permet de réaliser un balayage au moins bidimensionnel de la cible contrastée.

- Avantageusement, la longueur des au moins un capteur optique, la longueur étant mesurée selon une direction perpendiculaire à une droite passant par l'axe de rotation et par un centre du capteur optique, est comprise entre 0.1mm et 1m, avantageusement entre 0.5mm et 50cm, et de préférence égale à 2.5mm, et la largeur des au moins un capteur optique, la largeur étant mesurée selon une direction parallèle à une droite passant par l'axe de rotation et par un centre du capteur optique, est comprise entre 0.1mm et 1m, avantageusement entre 0.5mm et 50cm, et de préférence égale à 2.5mm.

- Avantageusement, la longueur des cellules photosensibles, la longueur étant mesurée selon une direction perpendiculaire à une droite passant par l'axe de rotation et par un centre du capteur optique, est comprise entre 0.001mm et 1m, avantageusement entre 0.01mm et 10cm, et de préférence égale à 1cm, et la largeur des cellules photosensibles, la largeur étant mesurée selon une direction parallèle à une droite passant par l'axe de rotation et par un centre du capteur optique, est comprise entre 0.001mm et 1m, avantageusement entre 0.01mm et 10cm, et de préférence égale à 1cm.

- Avantageusement, les cellules photosensibles comprennent au moins une photodiode, avantageusement au moins deux, et dans lequel la longueur d'onde de détection de l'au moins une photodiode est comprise entre 400 nanomètres et 1000 micromètres, avantageusement entre 700 nm et 1000 micromètres, de préférence entre 700nm et 1500nm.

Cela permet de travailler dans une gamme spectrale restreinte et de ne pas être parasité par des longueurs d'ondes non souhaitées.

- Avantageusement, la pluralité de cellules photosensibles comprend des cellules photosensibles configurées pour détecter des radiations selon des longueurs d'onde identiques.

- Avantageusement, la au moins une pluralité de cellules photosensibles comprend des cellules photosensibles configurées pour détecter des radiations selon des longueurs d'onde différentes les unes des autres. Cela permet de disposer d'un système de détection polyvalent permettant par exemple de travailler aussi bien dans l'obscurité qu'en plein jour. En effet, certaines cellules photosensibles peuvent être configurées pour détecter les rayonnements infrarouges et d'autres pour les rayonnements visibles.

- Avantageusement, l'actionneur est configuré pour entraîner en rotation le premier support solidaire des optiques, le deuxième support étant maintenu fixe par rapport à un bâti du système.

La présente invention trouve son application dans le domaine de la détection, et plus particulièrement dans la détection optique pour des systèmes autonomes robotisés. Par exemple et de manière non limitative, la présente invention peut concerner un système de détection optique de la position relative d'une cible contrastée par rapport audit système de détection.

De manière générique, une cible contrastée est une cible présentant au moins une variation de contraste (c'est-à-dire une différence de luminance) entre au moins deux zones de sa surface. De manière courante, une cible contrastée présente des zones noires et des zones blanches.

Le développement des drones ces dernières années n'a cessé de croitre. Disposant maintenant d'une plus grande autonomie et de système GPS de localisation, les drones peuvent être équipés de divers instruments afin d'effectuer plusieurs tâches. Toutefois l'autonomie énergétique reste toujours un problème, limitant la portée d'action des drones. Une solution connue depuis longtemps des roboticiens est l'utilisation de stations de recharge dont la position est connue du robot. Ainsi des robots du type aspirateur sont configurés pour détecter leur position relative à leur station de recharge et évaluer l'énergie nécessaire pour y retourner. Dès que ce niveau d'énergie est atteint, le robot retourne à sa station afin de recharger ses batteries. Dans le cas de drones, cette technologie peut s'appliquer. Toutefois, les drones évoluant en extérieur, une station de recharge par induction présente une résistance bien meilleure aux conditions météorologiques : absence de corrosion des contacts électriques par exemple. Cependant, la recharge par induction n'est efficace que si le couplage inductif est correctement effectué, nécessitant une très grande précision dans le positionnement du drone par rapport à la station de recharge inductive.

La présente invention concerne un système de détection particulièrement adapté à cette situation présentant une hyperacuité permettant la localisation angulaire d'une cible contrastée. Avec ces données de localisation, le drone peut ajuster sa position relative à la cible comprise par la station de recharge inductive afin de se positionner correctement.

Selon un mode de réalisation, la présente invention concerne donc la réalisation d'un système de détection passif capable de localiser avec une grande précision et néanmoins peu de cellules photosensibles la position angulaire d'une cible bidimensionnelle contrastée. Si la distance à la cible est connue, le système de détection permet de connaître la position spatiale relative du système de détection par rapport à la cible dans un plan horizontal. De plus, ledit système de détection permet aussi de mesurer l'orientation du système de détection par rapport à la cible selon un axe de rotation perpendiculaire à la cible (axe de lacet dans le cas de l'axe vertical). Ainsi, le présent système offre, si celui-ci est embarqué sur un drone, toutes les mesures nécessaires à un positionnement fin dudit drone dans un espace tridimensionnel par rapport à la station de recharge par induction pour drones.

Le système de détection peut venir en complément d'une caméra (caméra boule ou sur tourelle par exemple) car il permet de par sa forme en anneau d'être positionné autour d'une caméra existante et donc ne gêne en rien l'utilisation de celle-ci pour des taches de plus haut niveau (observation, inspection...)

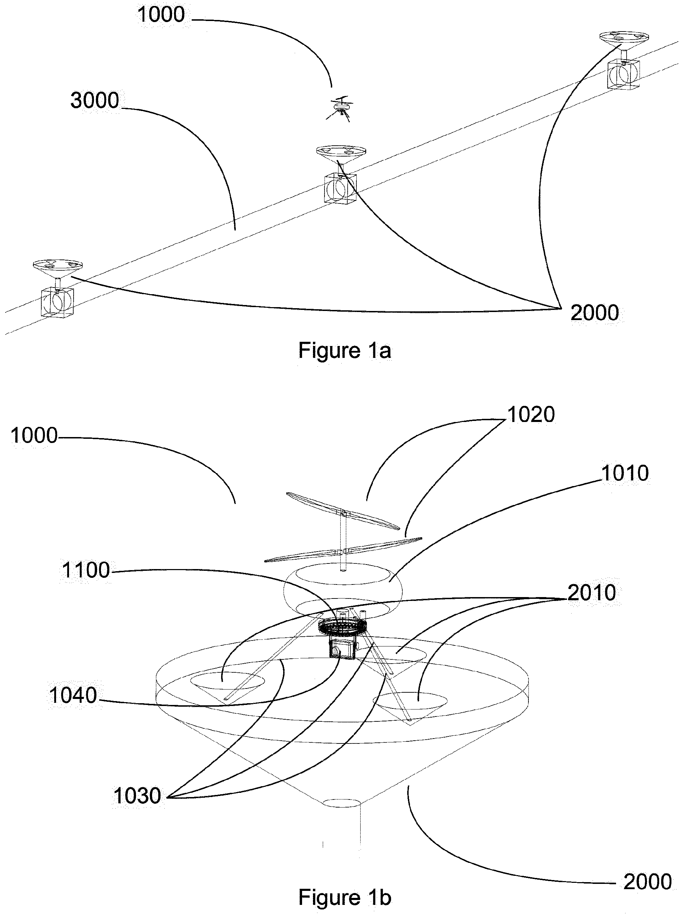

La figure 1a illustre, selon un mode de réalisation, un drone 1000 se déplaçant le long d'un pipeline 3000 afin d'y effectuer divers taches comme par exemple l'inspecter à l'aide d'une caméra haute résolution. Le pipeline dispose de stations de recharge inductives 2000. Les positions GPS de ces stations sont, par exemple, connues par le drone 1000. Ainsi le drone 1000 peut aisément se diriger vers elles. Toutefois, afin de pouvoir se recharger efficacement et le plus rapidement possible, le couplage inductif doit être précis.

La figure 1b illustre un drone 1000 positionné sur une station de recharge inductive 2000. Le drone, selon un mode de réalisation, comprends un corps principal 1010, des moyens de vol et de déplacement tridimensionnels 1020, des moyens de maintien 1030 et une caméra haute résolution 1040. Les moyens de maintien 1030 sont par exemple des tiges comprenant des moyens de recharge par induction. Ces moyens de recharge par induction sont positionnés de manière précise par rapport à la station de recharge inductive afin que le couplage inductif soit maximum, permettant un temps de charge le plus faible possible pour une charge maximale. Afin de réaliser ce positionnement, le drone 1000 comprend un système de détection 1100 selon la présente invention et configuré pour déterminer la position relative du drone 1000 par rapport à la station de recharge inductive 2000 avec une hyperacuité.

En effet, le système GPS permet de positionner le drone 1000 de manière très proche de la cible, mais n'a une précision que de quelques mètres. Le drone 1000 a besoin d'une précision inférieure à 1cm, de préférence à 0,5cm et avantageusement égale à 1mm pour se positionner convenablement sur la station de recharge inductive 2000 au niveau des points de charge 2010.

Ainsi, la figure 1a illustre un exemple d'application non limitatif de la présente invention où un drone 1000 équipé du système de détection selon la présente invention peut automatiquement se poser de base 2000 en base 2000 lors d'une phase d'inspection de pipeline 3000. Les bases 2000 peuvent ici recharger les batteries du drone 1000 grâce à une technologie d'induction impliquant un positionnement fin des tiges 1030 du train d'atterrissage du drone 1000 par rapport aux bobines de recharge principales 2010 de la base 2000. La figure 1b montre un exemple où le système de détection 1100 est monté sur un drone 1000 à rotors co-axiaux contra-rotatifs. Un autre avantage du système de détection 1100 selon la présente invention est de pouvoir être monté autour d'une caméra boule 1040 ou montée sur une nacelle. L'application de cet exemple non limitatif concerne le positionnement d'un drone 1000 au-dessus de sa base de recharge 2000 tapissée d'une cible contrastée aidant la localisation optique de la station de recharge. Le système de détection 1100 est configuré pour mesurer sa position angulaire par rapport à une cible contrastée. La présente invention est configurée pour déterminer, en fonction du temps et au moins en deux dimensions, la position angulaire dudit système de détection 1100 par rapport à ladite cible contrastée. La position angulaire peut comprendre trois angles : $\Phi$ pour le roulis, $\theta$ pour le tangage et $\psi$ pour le lacet.

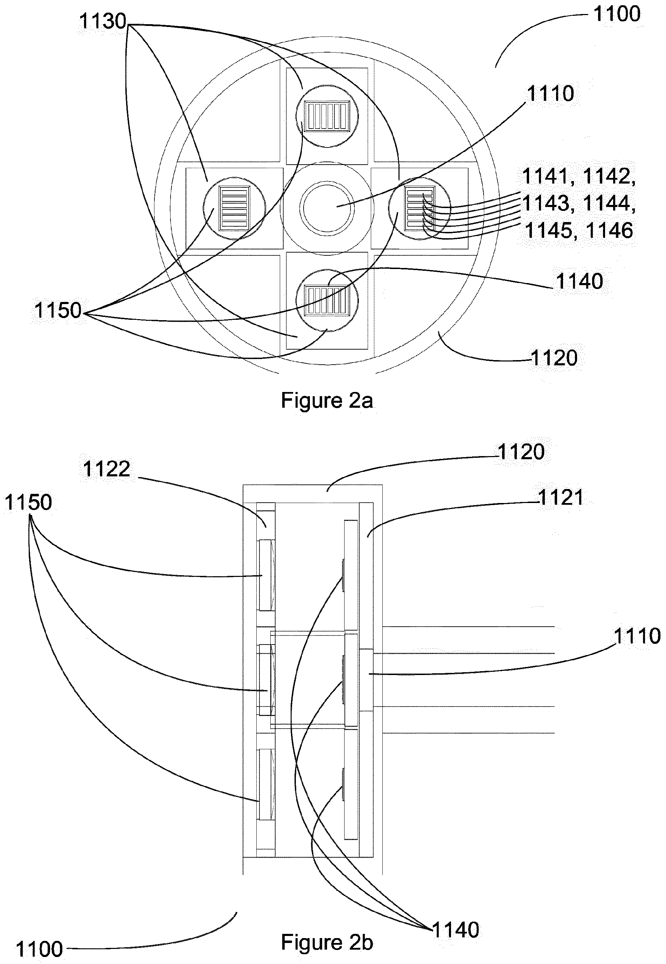

Les figures 2a et 2b illustrent, selon un premier mode de réalisation de la présente invention, le système de détection 1100. Ce système de détection 1100 comprend au moins deux dispositifs optiques, appelés yeux 1130 dans la suite de la description, et de préférence quatre.

Avantageusement ces 4 yeux 1130 sont disposés en croix autour d'un axe central 1110 et sont supportés de préférence par un support circulaire 1120.

Selon un mode de réalisation, au moins deux yeux 1130 sont disposés avec un écart angulaire compris entre 0° et 360°, avantageusement entre 45° et 270° et de préférence égal à 90°. Le nombre d'oeil 1130 que peut comprendre le système de détection 1100 est compris entre 1 et 1000, avantageusement entre 2 et 500 et de préférence égal à 4.

De manière particulièrement avantageuse, chaque oeil 1130 comprend au moins une optique 1150 et au moins un capteur optique 1140.

Selon un autre mode de réalisation possible, l'au moins une optique 1150 est commune à une pluralité de capteurs optiques 1140.

Avantageusement, le capteur optique 1140 est positionné sur le support 1121 de sorte à ne pas être dans le plan focal de ladite optique 1150. Ce positionnement particulier permet un premier filtrage spatial par la formation d'un flou dit gaussien au niveau du capteur optique 1140. Ce flou gaussien correspond à une distribution sensiblement gaussienne de l'intensité lumineuse reçue par le capteur optique 1140. Par exemple, le capteur optique 1140 est positionné entre l'optique 1150 et le plan focal de ladite optique 1150, ou alors le capteur optique 1140 est positionné au-delà du plan focal de ladite optique 1150.

Selon un mode de réalisation particulièrement avantageux, le capteur optique 1140 comprend une pluralité de cellules photosensibles (1141, 1142, 1143, 1144, 1145, 1146).

La pluralité de cellules photosensibles (1141, 1142, 1143, 1144, 1145, 1146) est positionnée par rapport à l'optique 1150 de manière à ce que tous rayons lumineux transmis par ladite au moins une optique 1150 soit reçus par ladite pluralité de cellules photosensibles (1141, 1142, 1143, 1144, 1145, 1146).

Selon un mode de réalisation privilégié, chaque cellule photosensible comprend au moins une photodiode, avantageusement deux. Ces photodiodes sont configurées pour détecter une gamme de longueur d'onde précise. Par exemple, les photodiode peuvent être configurées pour ne capter que des rayonnements lumineux dans la gamme des longueurs d'ondes du visible ou bien uniquement dans la gamme des longueurs d'ondes infrarouges pour des applications nocturnes pas exemple. Ainsi, de manière préférentielle, le spectre optique détectable par ces ou cette photodiode est compris entre 400 nanomètres et 1000 micromètres, avantageusement entre 700 nm et 1000micromètres, de préférence entre 700nm et 1500nm.

De manière très avantageuse, les photodiodes peuvent être de différents types afin de couvrir une gamme spectrale étendue.

Les supports 1121 et 1122 sont configurés pour pouvoir effectuer une rotation relative l'un par rapport à l'autre. Par exemple, ils sont configurés pour qu'un roulement permette cette rotation relative.

Selon un mode de réalisation particulièrement avantageux, le support 1122 est configuré pour pouvoir être animé d'une rotation relativement au support 1121.

Selon un autre mode de réalisation possible, le support 1121 est configuré pour pouvoir être animé d'une rotation relativement au support 1122.

Selon un mode de réalisation préféré le premier support 1122 et le deuxième support 1121 sont montés coaxialement.

La rotation relative du support 1122 par rapport au support 1121 est effectuée autour de l'axe central 1110. Cet axe central 1110 est parallèle à l'axe optique d'au moins une optique 1150. De préférence, cet axe central 1110 n'est pas un axe optique d'une des optiques 1150. Du fait que les optiques 1150 sont supportées par le support 1122, le mouvement de rotation relative du support 1122 par rapport au support 1121 comprenant les capteurs optiques 1140 implique un mouvement de rotation relative des optiques 1150 par rapport aux capteurs optiques 1140.

Selon un mode de réalisation particulièrement préféré, le mouvement de rotation des optiques 1150 par rapport aux capteurs optiques 1140 est un mouvement de rotation oscillant de sorte à générer un balayage périodique des capteurs optiques 1140 par les optiques 1150. Avantageusement, la rotation relative des optiques 1150 par rapport aux capteurs optiques 1140 est d'une amplitude si faible par rapport aux dimensions des capteurs optique 1140, que cette rotation est avantageusement assimilable à une translation.

L'équation ci-dessous exprime la relation qui relie le rayon R du système de détection optique 1100 entre son centre et le centre optique de la lentille 1150 avec l'arc de cercle d' parcouru par la lentille 1150 lors du balayage de celle-ci devant un capteur optique 1140.

$$ d' = R tan\left(\frac{d}{R}\right) $$

Avec R le rayon du système de détection optique entre son centre et le centre optique de la lentille 1150, d la distance séparant deux cellules photosensibles adjacentes et l'arc de cercle parcouru par la lentille 1150 lors du balayage. On voit que si R est très grand devant d et que d est petit alors d'est approximativement égal à d.

Selon un mode de réalisation privilégié, R>>d, avantageusement R > 10 d, et de préférence R > 100 d.

En effet, par exemple, le secteur angulaire d'oscillation du centre optique 1151 de l'optique 1150 correspond au secteur angulaire formé par la longueur 1161 du capteur optique 1140. Ainsi l'arc de cercle réalisé par le centre optique 1151 lors de la rotation oscillante du support 1122 par rapport au support 1121, est suffisamment faible pour être comprise par l'étendue spatiale du capteur optique 1140.

D'un point de vue du capteur optique 1140, le centre optique réalise une translation et non une rotation. L'arc de cercle décrit par le centre optique 1151 de l'optique 1150 balaye le capteur optique 1140.

Selon un mode particulier de réalisation, le système de détection 1100 de la présente invention est composé de 4 yeux élémentaires, composés eux-mêmes d'une optique 1150 et c'un capteur optique 1140 comportant une barrette de cellules photosensibles unidimensionnelles. La structure mécanique du système de détection 1100 permet à la structure en croix supportant les 4 optiques 1150 de tourner par rapport à la carte électronique supportant les 4 capteurs optiques 1140. Ainsi, si la rotation autour de l'axe central 1110 est de faible amplitude (de l'ordre de quelques degrés) et périodique, alors les 4 optiques 1150 se translatent simultanément par rapport à chaque photodiode fixe, créant alors un balayage optique unidimensionnel périodique des axes optiques de chacun des 4 yeux 1130. De manière complètement réversible, le montage montré dans les figures 2a et 2b autorise aussi une translation des cellules photosensibles derrière chaque optique 1150 fixe.

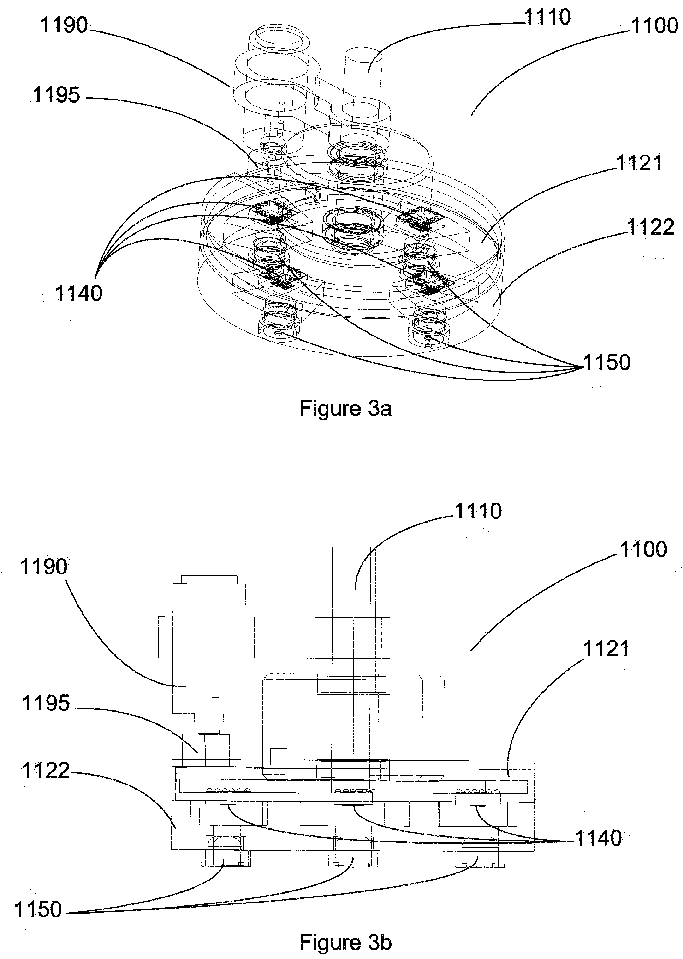

Selon un mode de réalisation, l'un des avantages de la configuration proposée dans la figure 2a est de pouvoir mettre en oeuvre deux directions différentes (ici orthogonales) de balayage optique avec un seul actionneur 1190. Les figures 3a et 3b montrent un exemple de montage d'un moteur 1190 utilisé pour générer le mouvement de rotation oscillant périodique de faible amplitude (vibration, autrement appelé oscillation). Le principe repose ici sur la mise en oeuvre d'un excentrique 1190 offrant les avantages suivants:

- Simplicité et robustesse mécanique ;
- Le moteur 1190 tourne dans un seul sens : évite des mouvements d'aller-retour responsables d'une usure prématurée ;
- Changement de la fréquence de balayage optique très simple en changeant juste la vitesse de rotation du moteur 1190.

Les figures 3a et 3b illustrent, selon un mode de réalisation, le système de détection 1100 et son système mécanique de rotation oscillante périodique autour de l'axe de rotation 1110 comprenant un actionneur 1190 et un élément de couplage 1195 avec le support 1122 de sorte à permettre aux optiques 1150 d'osciller devant les capteurs optiques 1140. Cet actionneur 1190 peut être un moteur électrique par exemple.

De préférence, l'actionneur 1190 est un moteur à excentrique permettant un mouvement oscillant périodique autour de l'axe de rotation 1110 de toute pièce mécanique mobile par l'intermédiaire de l'élément de couplage 1195.

Ainsi, la présente invention utilise un unique actionneur 1190 afin de réaliser la rotation oscillante périodique d'une pluralité d'optiques 1150. Cela permet alors une très grande synchronicité des balayages optiques mais également une diminution du poids et du volume du système de détection 1100 en comparaison à l'art antérieur nécessitant un actionneur par oeil. Ici, un unique actionneur 1190 est configuré pour coopérer avec une pluralité d'yeux 1130. La fréquence d'oscillation peut facilement être modifiée en changeant la vitesse de rotation de l'actionneur 1190.

Selon un mode de réalisation, le couplage mécanique 1195 est réalisé entre l'actionneur 1190 et le support 1121 de sorte à permettre aux capteurs optiques 1140 d'osciller par rapport aux optiques 1150 qui elles restent fixe selon ce mode de réalisation.

Selon un autre mode de réalisation, l'actionneur 1190 assure une rotation continue du support 1122 ou bien du support 1121. Ainsi, selon ce mode de réalisation, une rotation continue d'au moins un support par rapport à l'autre permet un balayage périodique des capteurs optiques 1140 par le centre optique 1151 de l'optique 1150. Selon ce mode de réalisation, au moins une optique 1150 est nécessaire.

Les figures 3a et 3b illustrent un exemple non limitatif de mise en oeuvre du moteur à excentrique 1190 utilisé pour générer le mouvement de balayage optique périodique de faible amplitude. Le moteur 1190 fait tourner un cylindre 1195 dont l'axe de rotation ne passe pas par son centre. Ce cylindre 1195 est positionné dans un trou oblong creusé dans la pièce 1122 supportant les 4 optiques 1150. Ainsi lors d'une rotation de l'excentrique, la pièce 1122 supportant les 4 optiques 1150, montée sur un roulement, subit alors un mouvement de rotation périodique de faible amplitude (quelques degrés) autour de l'axe 1110. Ici ce sont les optiques 1150 qui, localement, subissent une micro-translation périodique alors que les 4 capteurs optiques 1140 (rétines) sont fixes.

Grâce au mouvement de balayage selon deux directions orthogonales, il est possible de localiser une cible contrastée 1112 bidimensionnelle de type croix par exemple, ellipse ou même un marqueur de type 4 quadrants similaires à ceux utilisés dans les crashs tests par exemple. Ce type de marqueur présentant l'avantage d'être invariant quel que soit la distance qui le sépare du système de détection 1100, contrairement à une croix dont l'angle sous-tendu de chaque barre varie fortement avec la distance.

Comme clairement illustré sur les figures et comme cela ressort de la description, les dispositifs optiques 1130 sont répartis autour d'un cercle ou sur un anneau centré sur l'axe de rotation 1110.

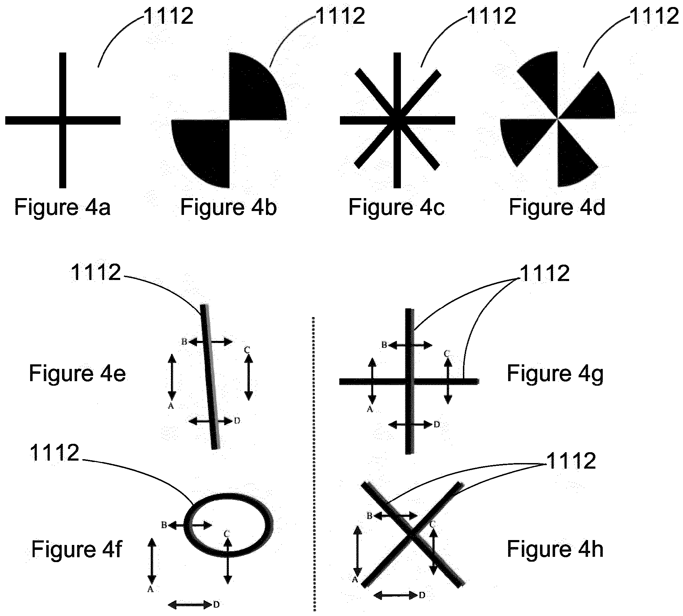

Les figures 4a à 4d illustrent plusieurs exemples de cibles contrastées 1112 bidimensionnelles. Ces cibles 1112 présentent au moins une symétrie centrale dans leur configuration. Elles comprennent avantageusement un fort contraste optique dans leur configuration. Avantageusement ces cibles 1112 sont composées d'éléments noirs sur un fond blanc.

On nomme branche une des droites concourantes formant une cible 1112. On suppose qu'une cible 1112 présente b droites qui sont toutes concourantes en un même point. Ainsi, une croix dispose de deux branches, une mire quatre cadrans également. Selon un mode de réalisation, on se restreint à l'étude de cible où le nombre de branches b est un multiple de 2 (b = 2k, où $k \in \mathbb{N}'$) afin d'assurer que l'angle séparant les branches soit un diviseur de $\frac{\pi}{2}$ (c'est-à-dire qu'il y ai un oeil 1130 aux angles 0, $\frac{\pi}{2}$, $\pi$, et $\frac{3\pi}{2}$, afin d'avoir une mesure direct de des angles Φ et). Selon un mode de réalisation, le nombre de branches b peut être quelconque.

Les figures 4e à 4i illustrent des exemples de balayages bidimensionnels de cibles contrastées bidimensionnelles 1112. Chaque balayage A, B, C et D est unidimensionnel. La combinaison d'au moins deux balayages unidimensionnels A, B, C et D correspond à un balayage bidimensionnel. En effet, l'écart angulaire des balayages entre les couples (A, C) et (B, D) permet de réaliser un balayage bidimensionnel de la cible 1112 simplement en réalisant deux balayages unidimensionnels présentant un écart angulaire non nul.

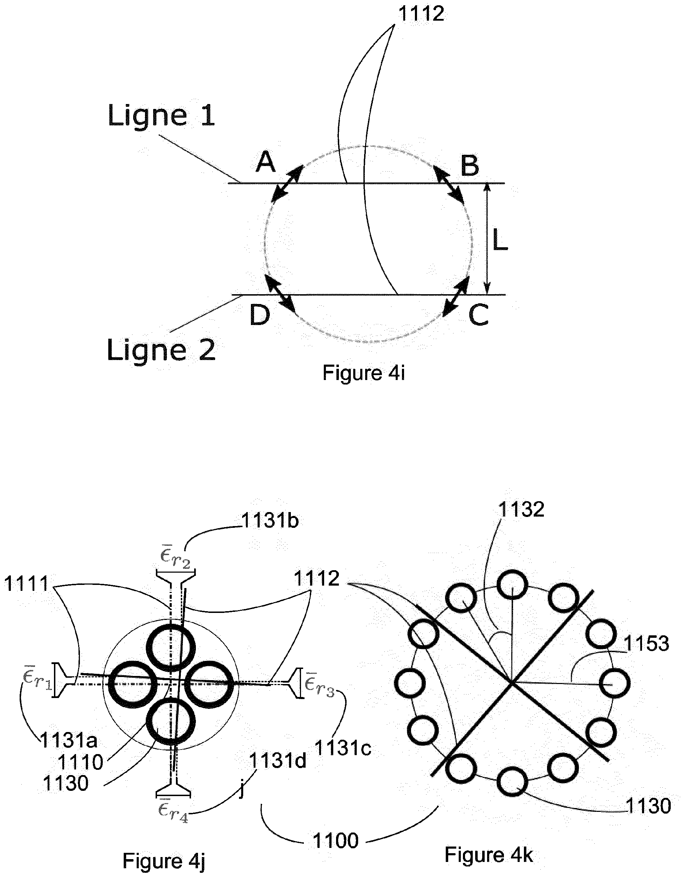

Selon un mode de réalisation, illustré par la figure 4i, la présente invention permet de déterminer la position du système de détection 1100 relativement à deux lignes 1112 dont la distance L les séparant est préalablement connue par le système de détection 1100. En effet si la distance L est connue alors il est possible, par exemple par triangulation, de remonter à une information de distance entre le système de détection 1100 et les 2 lignes 1112. Selon un exemple non limitatif, ces deux lignes peuvent être deux câbles, deux rails ou bien deux lignes sur un mur ou encore deux poteaux. Selon un mode de réalisation dans lequel le dispositif 1100 comprend 4 yeux 1130, chaque oeil 1130 correspond à un balayage unidimensionnel A, B, C et D. Dans cette configuration, les 4 yeux 1130 sont disposés selon la figure 2a, c'est en dire en croix.

Selon la figure 4e, les balayages A et C ne permettent pas la détection de la cible contrastée 1112 qui ne comprend qu'une seule ligne noire sur un fond blanc. En effet, seul les balayages B et D permettent la détection d'un changement de contraste.

Selon la figure 4f, les balayages B et C sont les seuls permettant la détection de la cible contrastée 1112.

Selon la figure 4g, l'ensemble des yeux du dispositif 1100 détecte le changement de contraste lors des balayages A, B, C et D permettant la détection de la cible contrastée 1112.

Selon la figure 4h, les balayages B et C permettent la détection de la cible contrastée 1112.

Selon la figure 4i, les balayages A et B permettent la localisation d'une première ligne 1112 tandis que les balayages C et D permettent la localisation d'une seconde ligne 1112.

Il apparait alors que deux yeux 1130 présentant un écart angulaire non nul sont nécessaires pour la détermination optique d'une cible contrastée bidimensionnelle 1112. Toutefois, il apparait également que plus le nombre d'yeux 1130 est grand et meilleure est la détermination optique de la cible contrastée bidimensionnelle 1112.

Dans le cas d'une croix, une fusion adéquate des signaux de chaque oeil 1130 permet de localiser l'objet dans un plan mais aussi de connaître son orientation relative (cas illustré par la figure 4h) par rapport au système de détection 1100.

Les figures 4j et 4k illustrent, selon deux modes de réalisation différents de la présente invention, le principe de balayage par le système de détection 1100 d'une cible contrastée 1112. Le balayage de la cible 1112 par chacun des yeux 1130 du dispositif 1100 conduit à une mesure locale 1131a, 1131b, 1131c, 1131d pour chaque oeil. Ces mesures locales d'intensité lumineuse permettent de détecter la cible contrastée 1112. En effet, les yeux 1130 mesurent l'intensité lumineuse et lorsque le balayage spatial traverse un changement de contraste, l'intensité lumineuse en est alors modifiée, et l'oeil 1130 détecte ce changement de contraste.

Il apparait évident au regard de la figure 4k que plus le nombre d'yeux 1130 est important et plus précise sera la détection de la cible contrastée bidimensionnelle 1112.

En effet, selon l'orientation de la cible contrastée 1112 bidimensionnelle par rapport à l'oeil 1130, dans le cas où il n'y a que 4 yeux 1130, la cible 1112 ne peut pas être vue car il y a une branche tous les 90° et le champ visuel d'un oeil 1130 est compris entre 0° et 360°, avantageusement entre 45° et 315°, et de préférence égale à 90°. L'utilisation d'yeux 1130 supplémentaires pallie à ce problème.

Les yeux 1130 supplémentaires apportent plus de redondance et donc une fusion de meilleures qualité, moins sensible au bruit de mesure, dans la chaine de traitement des signaux que nous allons décrire plus loin dans la description. De plus, un plus grand nombre d'yeux 1130 implique un diamètre plus grand du système de détection 1100 et donc une meilleure précision de la mesure de l'angle de lacet du drone.

La figure 4k illustre une vue de dessus du système de détection 1100 : L'angle $\beta$ 1132 correspond à l'angle séparant deux yeux 1130, tous disposés uniformément sur un cercle de rayon $r_c$ 1153.

Selon un mode de réalisation, la figure 4j montre la mesure 1131a, 1131b, 1131c, 1131d effectuée par chacun des yeux 1130 si l'on place une croix 1112 orientée de façon arbitraire en dessous du système de détection 1100. Un repère orthonormé (O, x, y, z) peut être défini tel que O soit le centre du cercle sur lequel sont disposés les yeux 1130, les vecteurs x et y pointent tous deux vers deux oeil 1130 différents positionnés à 90° l'un de l'autre. Dans cet exemple, la cible 1112 se trouve à une distance D sur l'axe -z (c'est-à-dire en dessous de l'oeil 1130) perpendiculaire à l'axe x et à l'axe y. On suppose que cette croix est orientée d'un angle $\Phi$ selon le roulis, $\theta$ selon le tangage et d'un angle $\psi$ en lacet, par rapport au système de détection 1100.

Notons $\varepsilon_{ri}$ la position angulaire du contraste dans le champ de vision de l'oeil i, on peut en déduire les 3 orientations de la cible. Les deux premières orientations sont triviales :

$$\overline{\Phi} = \frac{1}{2}\left(\overline{\epsilon}_{r_2} + \overline{\epsilon}_{r_4}\right)$$

$$\overline{\theta} = \frac{1}{2}\left(\overline{\epsilon}_{r_1} + \overline{\epsilon}_{r_3}\right)$$

Où la notation $\overline{X}$ représente la mesure de la grandeur X.

L'orientation selon le lacet dépend quant à elle de la géométrie du système de détection 1100, principalement la distance $r_c$ entre le centre optique 1151 des optiques 1150 et le centre de l'axe de rotation 1110 du système de détection 1100, ainsi que de la distance D qui sépare le centre du système de détection 1100 de la cible 1112. L'orientation selon le lacet est obtenue en moyennant la mesure de l'orientation faite par le couple d'yeux opposés les uns par rapport aux autres.

$$\bar{\psi} = \frac{1}{2} \left[ \tan^{-1} \left( \frac{D.\tan\left( \frac{\bar{\epsilon}_{r1} - \bar{\epsilon}_{r3}}{2} \right)}{r_c} \right) + \tan^{-1} \left( \frac{D.\tan\left( \frac{\bar{\epsilon}_{r2} - \bar{\epsilon}_{r4}}{2} \right)}{r_c} \right) \right]$$

Où $r_c$ est le rayon du cercle 1153 sur lequel sont disposés les yeux et D est la distance entre le système de détection 1100 et la cible 1112 (projetée sur l'axe Oz).

Dans le cas de petits angles ψ < 20°), où l'on peut considérer que tanX = X, le calcul se simplifie de la façon suivante:

$$\bar{\psi} = \tan^{-1} \left( \frac{D.\tan(\bar{\alpha})}{r_c} \right)$$

avec

$$\bar{\alpha} := \frac{1}{4} \left( (\bar{\epsilon}_{r1} - \bar{\epsilon}_{r3}) - (\bar{\epsilon}_{r2} - \bar{\epsilon}_{r4}) \right)$$

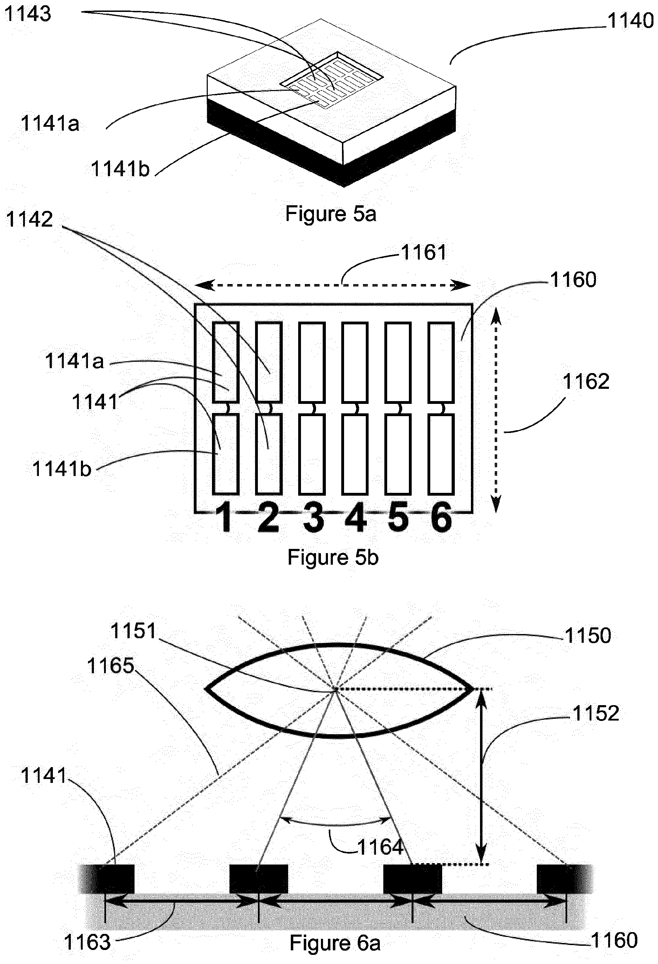

Les figures 5a et 5b illustrent, selon un mode de réalisation, un capteur optique 1140 composant un oeil 1130 du système de détection 1100 selon la présente invention.

Le capteur optique 1140 comprend au moins deux cellules photosensibles 1141 et 1142, avantageusement il comprend 6 cellules photosensibles 1141, 1142, 1143, 1144, 1145, 1146.

L'invention s'applique à des capteurs optiques présentant des dimensions très variées. En effet elle sera avantageuse aussi bien pour des petits capteurs que pour des capteurs de grande dimension.

Selon un mode de réalisation, le nombre de cellules photosensibles compris par le capteur optique 1140 est compris entre 1 et 1000, avantageusement entre 2 et 500 et de préférence égal à 5.

De manière avantageuse et non limitative, le nombre de cellules photosensibles compris par le capteur optique 1140 est fonction des domaines applicatifs de la présente invention.

Avantageusement, une cellule photosensible 1141 comprend au moins deux cellules photosensibles 1141a et 1141b, supportées par un support 1160.

De manière avantageuse et non limitative, le support 1160 a une longueur qui est fonction du nombre de cellules photosensibles et donc des domaines applicatifs de la présente invention.

De manière avantageuse et non limitative, le support 1160 a une largeur 1162 qui est fonction du nombre de cellules photosensibles et donc des domaines applicatifs de la présente invention.

Ces dimensions, mises en comparaison avec l'arc de cercle décrit par le centre optique 1151 de l'optique 1150, vont permettre d'approximer le mouvement de rotation relative de l'optique 1150 par rapport au capteur optique 1140 comme un mouvement de translation.

Les figures 5a et 5b illustrent des schémas de principe d'un capteur optique 1140 à 6 cellules photosensibles, chacune composée de deux cellules photosensibles de manière non limitative, d'un oeil 1130 du système de détection 1100 selon la présente invention. Le capteur optique 1140 est constitué avantageusement d'une matrice de cellules photosensibles 1141a, 1141b, 1142a, 1142b, 1143a, 1143b, 1144a, 1144b, 1145a, 1145b, 1146a, 1146b. De manière avantageuse, les cellules photosensibles peuvent être reliées verticalement de façon à améliorer la sensibilité du capteur optique 1140.

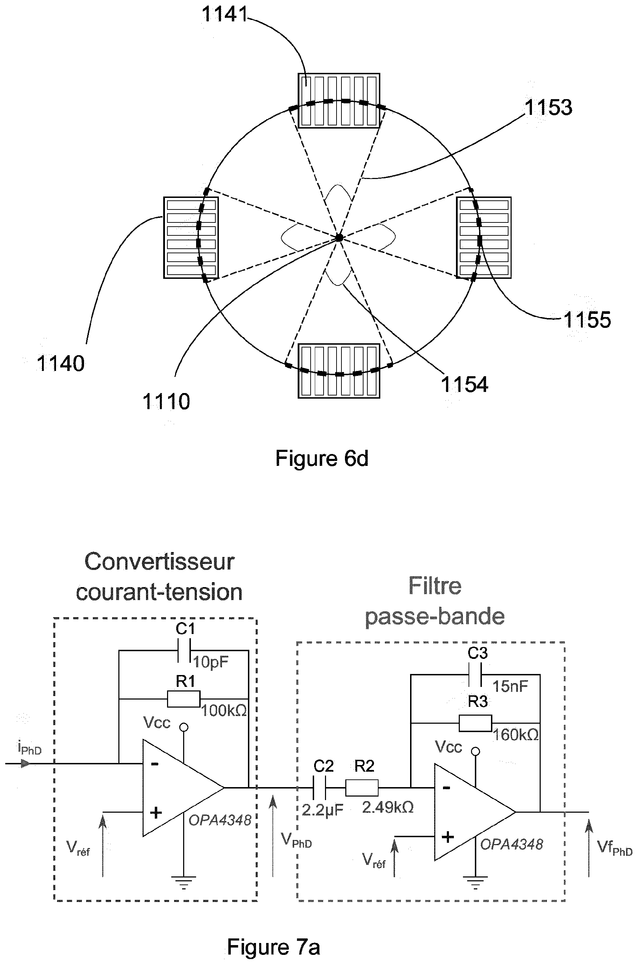

Les figures 6a à 6d illustrent les paramètres optiques d'un oeil 1130 selon un mode de réalisation de la présente invention, et plus particulièrement les chemins optiques 1165 de rayons lumineux, passant par le centre optique 1151 de l'optique 1150, reçus par les cellules photosensibles, comme par exemple par la cellule photosensible 1141.

Selon un mode de réalisation, les figures 6a à 6d illustrent les paramètres de configuration optiques caractéristiques d'un oeil 1130. La distance 1152 $L_f$ est la distance entre les cellules photosensibles et l'optique 1150, et $\delta_{PhD}$ est la distance 1163 séparant deux cellules photosensibles adjacentes, distance autrement appelée pitch en anglo-saxon. L'ajustement de la longueur 1152 $L_f$ permet de modifier l'angle entre deux axes optiques adjacents 1164 $\Delta\phi$.

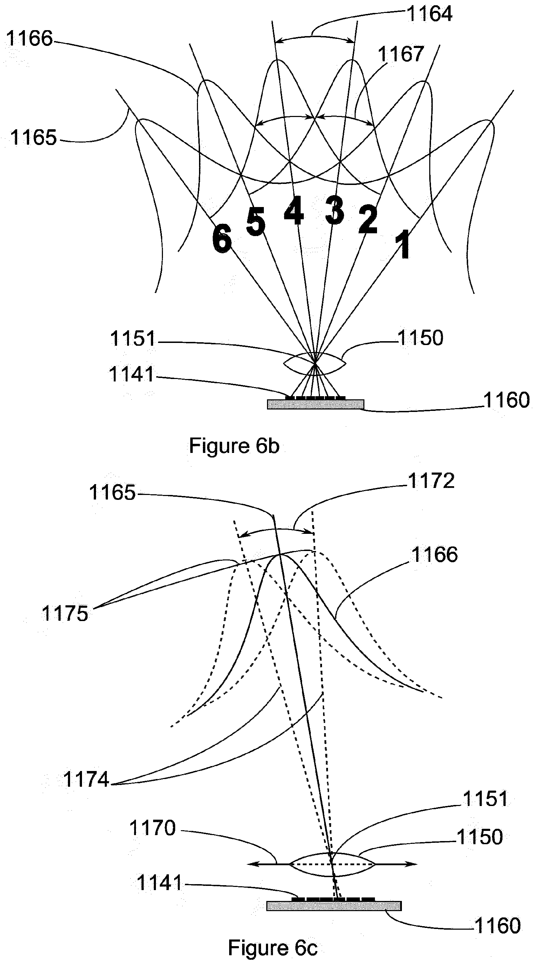

La figure 6b illustre une représentation schématique des paramètres optiques d'un oeil 1130 comprenant 6 cellules photosensibles mettant en évidence l'angle d'acceptance 1167 $\Delta\rho$, et l'angle 1164 $\Delta\phi$.

La figure 6c illustre une représentation schématique de l'amplitude de vibration 1172 $\Delta\psi_{mod}$ obtenue par une translation de l'optique 1150, créant ainsi une modulation synchrone d'amplitude 1172 $\Delta\psi_{mod}$ pour chaque cellule photosensible.

Une même modulation peut être obtenue en déplaçant le capteur optique 1140 placée derrière une optique 1150 fixe.

De manière avantageuse et non limitative, la distance détecteur/détecteur 1163 séparant deux cellules photosensibles adjacentes est fonction des domaines applicatifs de la présente invention.

Selon un mode de réalisation, la distance optique/capteur 1152, séparant un plan passant par le centre optique 1151 de l'optique 1150 et parallèle au support 1160, et un plan passant par l'arase des cellules photosensibles 1141, 1142, 1143, 1145, 1146 et parallèle au support 1160, est comprise entre 0.001mm et 1m, avantageusement entre 0.1mm et 0.5m et de préférence égale à 1mm. Selon les applications envisagées la distance pourra sortir de ces intervalles.

De manière avantageuse et non limitative, l'angle 1164 formé par les chemins optiques 1165 propres à deux cellules photosensibles adjacentes est fonction des domaines applicatifs de la présente invention.

Selon un mode de réalisation, l'angle 1164 formé par les chemins optiques 1165 propres à deux cellules photosensibles adjacentes, est compris entre 0.1° et 10°, avantageusement entre 1° et 5° et de préférence égale à 4°. Selon un mode de réalisation, l'angle 1167, appelé angle d'acceptance, qui traduit la sensibilité angulaire de chaque cellule photosensible, est compris 0.1° et 10°, avantageusement entre 1° et 5° et de préférence égale à 4°

Avantageusement, la distance détecteur/détecteur 1163 étant fixée par la conception du capteur optique 1140, seule la distance optique/capteur 1152 peut servir de paramètre d'ajustement de l'angle 1164 et de l'angle d'acceptance 1167.

Selon un mode de réalisation préférentiel, le plan contenant le capteur optique 1140 n'est pas contenu dans le plan focal de l'optique 1150 de sorte à ce que l'optique 1150 est dite défocalisée par rapport au capteur optique 1140. Cette défocalisation se traduit par une distribution gaussienne 1166 de l'intensité lumineuse reçue par les cellules photosensibles 1140. Ce flou gaussien sert alors de filtre spatial passe-bas. De même les vibrations subies par le dispositif lorsque celui-ci est monté sur un engin volant permettent d'améliorer la sensibilité du présent système de détection 1100.

Lorsque l'actionneur 1190 engrène le support 1122, l'optique 1150 effectue alors un mouvement de rotation relative par rapport au capteur optique 1140. Ce mouvement de rotation relative correspond à une oscillation. Cette oscillation de l'optique 1150 correspond à une oscillation de son centre optique 1151. Cette oscillation implique un balayage du capteur optique 1140 par le centre optique 1151. De ce fait la distribution gaussienne de l'intensité lumineuse 1166 reçue par chaque cellule photosensible subit une oscillation 1172 formant ainsi une pluralité 1175 de distribution gaussienne de l'intensité lumineuse 1166 reçue par chaque cellule photosensible. Cette pluralité 1175 de distributions gaussiennes de l'intensité lumineuse 1166 reçue par chaque cellule photosensible correspond à un balayage optique angulaire unidimensionnel.

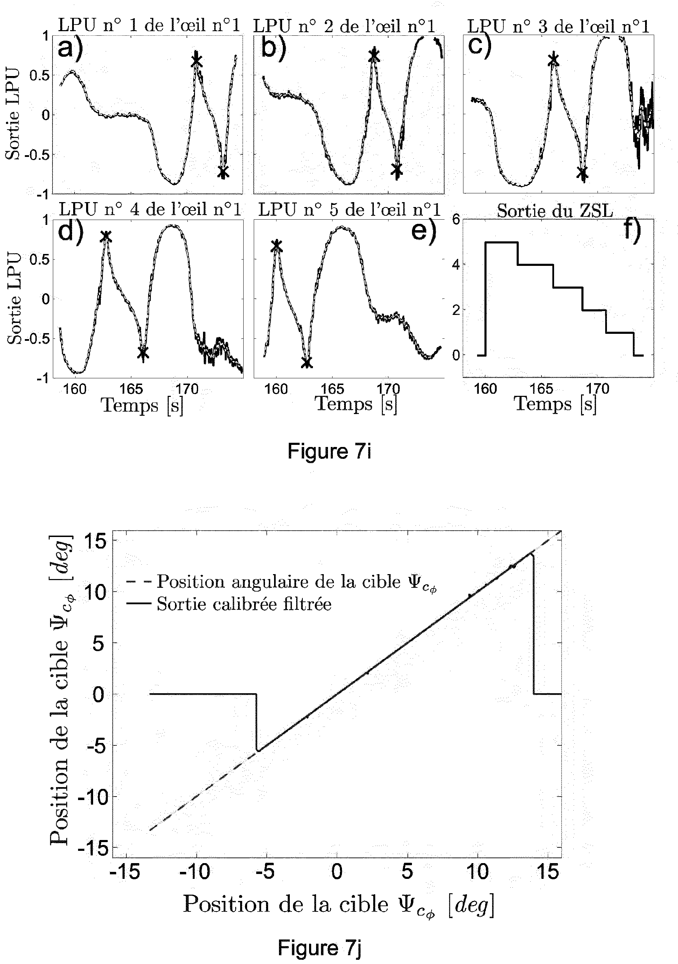

Les figures 7a et 7i illustrent différentes étapes de mesures optiques et de traitement de signaux obtenus à partir de la présente invention.

Selon un mode de réalisation illustré par la figure 7a illustre une partie du traitement électronique réalisé en parallèle pour chaque cellule photosensible. Le courant des cellules photosensibles $i_{Ph}$ est amplifié, filtré passe-bas et convertit en tension ($V_{Ph}$) par le premier étage correspondant au convertisseur courant-tension. Le deuxième étage, le filtre passe-bande, réalise la fonction de filtre passe-bande, grâce à un filtre passe-haut suivi d'un filtre passe-bas. La tension $Vf_{Ph}$ est alors l'image filtrée de l'intensité lumineuse perçue par la cellule photosensible et est ensuite numérisée grâce à un convertisseur analogique-numérique.

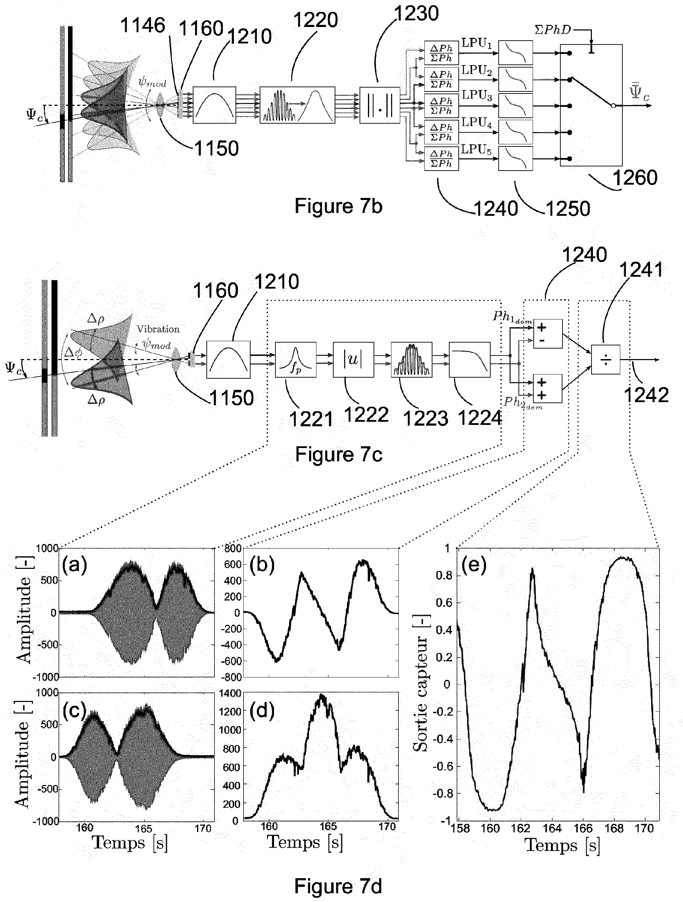

La figure 7b correspond à un schéma global de la chaine de mesure des rayons lumineux émis par une cible contrastée 1112 et reçus par un oeil 1130 selon la présente invention comprenant au moins une optique 1150, un capteur optique 1140 et une chaine de traitement (1210, 1220, 1230, 1240, 1250, 1260) des signaux optiques mesurés par l'oeil 1130.

Ainsi, la figure 7a illustre un schéma bloc complet permettant de passer des signaux des 6 cellules photosensibles à la mesure de la position angulaire de l'oeil 1130 par rapport à la cible contrasté 1112. Le signal de chaque cellule photosensible est démodulé, puis normalisé. Ensuite la différence sur la somme des signaux démodulés est réalisée, formant ainsi 5 unités locales de calcul, ou Local Processing Unit en terme anglo-saxon (LPU). Une table de correspondance est ensuite appliquée de façon à convertir la sortie de l'oeil 1130 en une mesure de position angulaire. Enfin, un détecteur ZSL, Zero-Setting-Limiter en anglo-saxon, sélectionne la paire qui voit le mieux le contraste pour rediriger sa mesure vers la sortie de l'oeil.

Dans le cas d'un système de détection 1100 tel que présenté dans la figure 2a, il y a 4 yeux 1130 comprenant chacun 5 LPU.

En l'état, chacun des 4 yeux 1130 fournit une mesure de la position angulaire d'un contraste avec une précision de l'ordre de 0.1° sur un champ de vision complet d'environ 20° par exemple.

De manière avantageuse et non limitative, le champ de vision d'un oeil est fonction des domaines applicatifs de la présente invention.

Selon un mode de réalisation, le champ de vision d'un oeil est compris entre 1° et 60°, avantageusement entre 1° et 30° et de préférence égal à 20°.

Chacun des yeux 1130 peut localiser un contraste de type front, ou barre, et les yeux 1130 sont disposés avantageusement sur un cercle et espacé les uns par rapport aux autres d'un angle compris entre 0° et 360°, avantageusement entre 45° et 270°, et de préférence égal à 90.

Selon cette configuration, il est possible de localiser précisément des cibles de type croix ou mire à quatre cadrans, si chaque oeil 1130 localise une des 4 barres de la croix ou un des 4 fronts de la mire.

La figure 7c illustre cette même chaine de mesure dans le cas où le capteur optique 1140 ne comprend que deux cellules photosensibles.

Dans les figures 7b et 7c, l'optique 1150 décrit un mouvement assimilable à une translation par rapport au capteur optique 1140.

Selon un mode de réalisation, chaque optique 1150 est placée au-dessus d'un capteur optique 1140, celui-ci ne se trouvant pas dans le plan focal de ladite optique 1150 de sorte à générer un flou gaussien permettant de réaliser un filtrage spatial des contrastes et donc d'éliminer les détails les plus fins.

Pour chaque oeil 1130 est défini un angle inter-récepteur 1164 et un angle d'acceptance 1167, tous deux étant fonction de la distance séparant le capteur optique 1140 et l'optique 1150.

Chaque oeil 1130 est animé d'un mouvement de rotation relative de l'optique 1150 par rapport au capteur optique 1140 de sorte à moduler le signal de chaque cellule photosensible.

Chaque oeil 1130 est composé d'un nombre N de cellules photosensibles permettant de créer N-1 paires de photorécepteurs. Chaque paire permet, grâce à un traitement effectué par une LPU, de localiser dans son champ visuel un contraste de type bar ou front. Le signal de sortie de chaque cellule photosensible est tout d'abord filtré analogiquement par un filtre passe bande 1210, permettant de présélectionner la fréquence de la porteuse (la fréquence de l'oscillation de l'optique 1150), d'effectuer une pseudo-dérivée et donc de centrer les signaux à l'entrée des convertisseurs analogiques numériques.

Après avoir été numérisé, chaque signal est à nouveau filtré à l'aide d'un filtre sélectif 1221 centré sur la porteuse (permettant ainsi d'annuler l'effet d'autres scintillements pouvant être présents comme le scintillement des lampes néons à la fréquence de 100 Hz). Ensuite une valeur absolue 1222 est appliquée au signal avant démodulation. La démodulation est effectuée par détection d'enveloppe 1223, puis l'enveloppe est débarrassée des composantes résiduelles de la porteuse grâce à un filtre passe bas 1224.

L'ensemble de ces étapes permet alors de démoduler les signaux mesurés par les cellules photosensibles. Ensuite le rapport de la différence des signaux démodulés d'une paire sur la somme de ces derniers permet de calculer un signal de sortie $Si_{LPU}$.

La sortie finale $Si_{LPU}$ de chaque LPU est donnée par le rapport de la différence des signaux démodulés d'une paire sur la somme de ces derniers :

$$S_{i_{LPU}} = \frac{\left|\dot{Ph}_{1_{dem}}\right| - \left|\dot{Ph}_{2_{dem}}\right|}{\left|\dot{Ph}_{1_{dem}}\right| + \left|\dot{Ph}_{2_{dem}}\right|}$$

Les sorties des LPU ont une caractéristique qui dépend de la position angulaire de l'objet contrasté, de l'angle sous-tendu de l'objet et des paramètres optiques de l'oeil. Par contre, la valeur de sortie S est indépendante de la valeur du contraste.

Ainsi, Chaque LPU délivre un signal de sortie $Si_{LPU}$ proportionnel à la position angulaire de l'objet contrasté placé dans son champ visuel local. La caractéristique de signal de sortie de la position dépend à la fois des paramètres intrinsèques de l'oeil 1130 et de la nature de la cible contrastée 1112. Une table de calibration peut donc être obtenue lors d'une phase de calibration afin de construire la correspondance entre la sortie brute de chaque LPU et la position réelle de la cible contrastée 1112.

Un oeil 1130 étant composé de plusieurs cellules photosensibles, un critère, permettant de passer d'une LPU à un autre et de détecter si un contraste est présent ou non dans le champ visuel de l'oeil 1130, est mis en place. Cette fonction est réalisée par un détecteur ZSL. Ce détecteur ZSL permet de sélectionner la LPU ayant dans son champ visuel le plus haut contraste et de détecter lorsqu'aucun contraste n'est pas vu et ainsi force la sortie $Si_{LPU}$ à être égale à 0.

Selon un mode de réalisation, on considère que la LPU voit un contraste si la somme des signaux démodulés est supérieure à un certain seuil et si une LPU adjacente voit également un contraste. Un second critère décrit ci-après est également mis en place afin de choisir la meilleure LPU.

Selon un mode de réalisation, la figure 7c illustre la chaine de traitement d'une LPU. Une vibration et/ou une oscillation de l'optique 1150 permet de moduler la position du contraste, puis un premier filtre analogique effectue une pseudo-dérivée et agit également comme un filtre anti-repliement. La porteuse est ensuite extraite à l'aide d'un filtre passe bande, une valeur absolue combinée à un détecteur d'enveloppe permet après un filtrage passe bas d'extraire l'enveloppe de chaque cellule photosensible ($Phi_{dem}$).

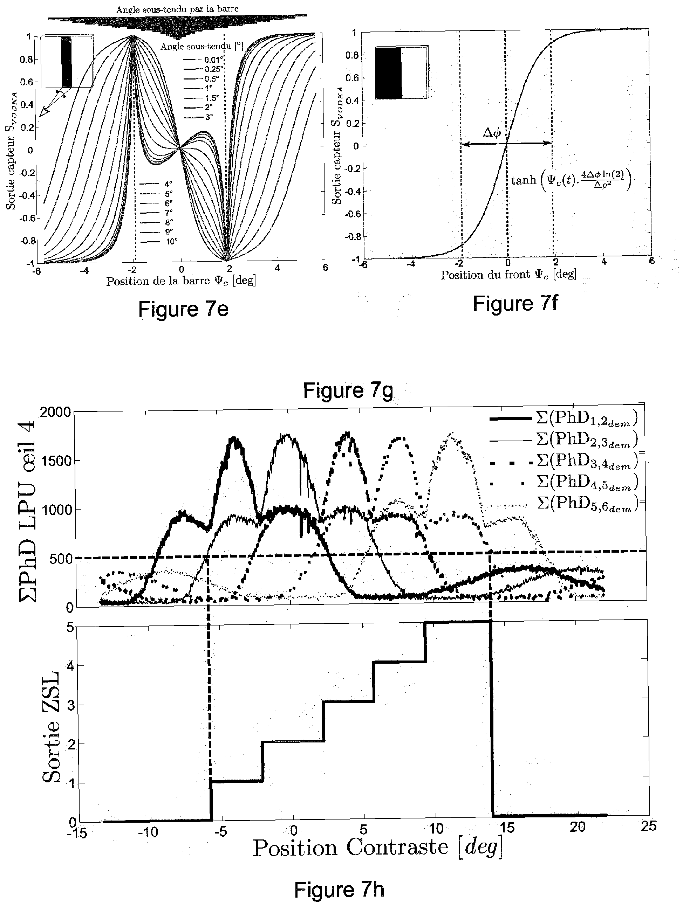

Selon un mode de réalisation et un exemple d'application non limitatif, les figures 7d (a) et (c) illustrent l'étape de démodulation avec un exemple de signal ainsi obtenu. La courbe de plus fort contraste l'enveloppe finale du signal après application du filtre passe bas. La figure 7d (b) illustre la différence des signaux démodulés (Ph1$_{dem}$-Ph2$_{dem}$) et la figure 7d (d) illustre la somme des signaux (Ph1$_{dem}$ + Ph2$_{dem}$). La figure 7d (e) illustre le signal de sortie du capteur optique obtenu pour une barre de largeur 2 cm situé à 1.32 m (soit un angle sous tendu égal à 0.87°) résultant de la différence sur la somme des signaux démodulés. Enfin, la figure 7e illustre la réponse caractéristique simulée du d'un oeil comprenant deux cellules photosensibles à une barre de largeur L (ici $\Delta\rho$ **= Delta**$\phi$ **= 3.8°**).

Le signal de sortie varie en fonction de l'angle sous tendu ($\alpha$) par rapport à la cible contrastée 1112 qui se trouve être ici une simple barre. On remarque que pour des angles sous tendus trop faibles la caractéristique de l'oeil 1130 devient non monotone, ce qui empêche de déduire une mesure de la position de la barre à partir de la sortie de l'oeil 1130. La figure 7f illustre la réponse caractéristique simulée d'un oeil 1130 comportant deux cellules photosensibles pour une cible comportant un front de contraste.

Sur les figures 7e et 7f, les lignes pointillées représentent l'intervalle $\left[-\frac{\Delta\phi}{2}; +\frac{\Delta\phi}{2}\right]$ correspondant au champ de vision d'une paire de cellules photosensibles.

La figure 7g illustre la somme des signaux des 6 cellules photosensibles démodulés de chacune des LPU d'un même oeil 1130. La LPU sélectionnée correspond à celle dont la somme est maximum et dont au moins une des sommes voisines est supérieure à un seuil (représentée par une droite en pointillé).

La figure 7h illustre la sortie du ZSL correspondante en fonction de la position du contraste. Le ZSL donne en sortie l'index de la LPU répondant aux 2 critères de sélection.

La figure 7i illustre les caractéristiques statiques (7i (a), (b), (c), (d), (e)) identifiées pour les différentes LPU d'un oeil 1130 comportant 6 cellules photosensibles. Les croix représentent les limites de la zone sélectionnée pour construire la table de calibration. La figure 7i (f) illustre le signal de sortie du ZSL qui donne l'indice de la paire à sélectionner, avantageusement un indice 0 traduit le fait que le contraste n'est vu par aucune LPU.

La figure 7j illustre la réponse d'un oeil une fois les LPU fusionnées pour un contraste se déplaçant en rampe devant l'oeil. Cette figure illustre donc la réponse réelle d'un oeil 1130 fusionnée pour un balayage de -16° à +16° à 1.67°.s$^{-1}$. La position réelle du contraste est représentée par une ligne en pointillés. L'application de la table de calibration et d'un post-traitement par FFT permet d'obtenir la mesure filtrée en trait continu, ce qui montre que la sortie est parfaitement confondue avec la position réelle, prouvant la fiabilité des différentes tables de calibration obtenues par la phase de calibration.

Selon un mode de réalisation, et dans le cas d'une cible contrastée 1112 comportant un front de contraste, la sortie de la LPU en fonction de la position du contraste est décrite par la fonction suivante : $\tanh\left(\Psi_c \frac{4\Delta\phi\ln(2)}{\Delta\rho^2}\right)$ où $\Psi_c$ est la position angulaire du contraste.

La sortie étant monotone sur l'intervalle $\left[-\frac{\Delta\phi}{2}; +\frac{\Delta\phi}{2}\right]$, il est possible en utilisant une table de calibration de remonter à la position angulaire réelle du front de contraste.

De même, pour une cible contrastée 1112 comprenant une barre ayant un angle sous tendu suffisamment grand, la sortie du capteur optique est strictement monotone sur $\left[-\frac{\Delta\phi}{2}; +\frac{\Delta\phi}{2}\right]$, permettant par l'utilisation d'une table de calibration (dépendant de l'angle sous tendu) de remonter à la position de la barre :

$$\frac{\left|e^{\frac{\Psi_c(t)\Delta\phi}{2\sigma^2}} . \sinh\left(\frac{\alpha}{2\sigma^2}\left(\Psi_c(t)-\frac{\Delta\phi}{2}\right)\right)\right| - \left|e^{-\frac{\Psi_c(t)\Delta\phi}{2\sigma^2}} . \sinh\left(\frac{\alpha}{2\sigma^2}\left(\Psi_c(t)+\frac{\Delta\phi}{2}\right)\right)\right|}{\left|e^{\frac{\Psi_c(t)\Delta\phi}{2\sigma^2}} . \sinh\left(\frac{\alpha}{2\sigma^2}\left(\Psi_c(t)-\frac{\Delta\phi}{2}\right)\right)\right| + \left|e^{-\frac{\Psi_c(t)\Delta\phi}{2\sigma^2}} . \sinh\left(\frac{\alpha}{2\sigma^2}\left(\Psi_c(t)+\frac{\Delta\phi}{2}\right)\right)\right|}$$

Avec :

$$\sigma = \frac{\Delta\rho}{2\sqrt{2ln(2)}}$$

La fusion entre la mesure locale des différentes LPU peut ensuite être réalisée en ajoutant juste un décalage, ou offset en terme anglo-saxon, correspondant à la position de la LPU sélectionnée. Le choix de la LPU étant obtenu grâce à l'index délivré par le détecteur ZSL.

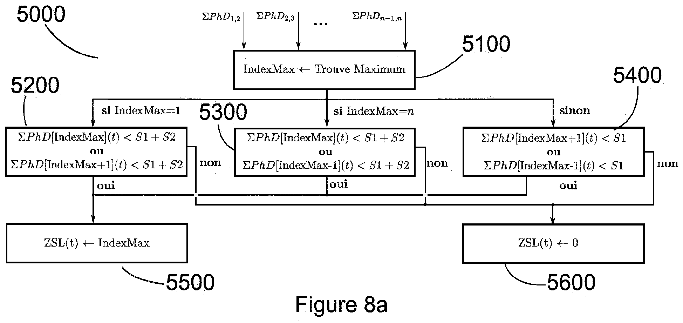

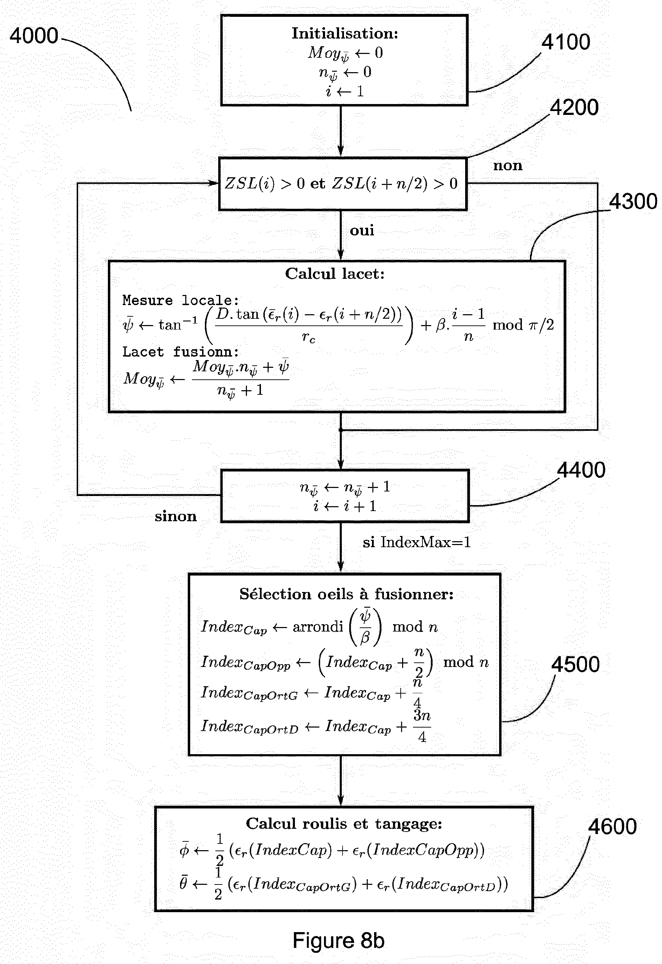

Les figures 8a et 8b illustrent, selon un mode de réalisation de la présente invention, deux algorithmes de traitement de signaux.

La figure 8a illustre l'algorithme permettant de choisir la meilleure LPU. Chaque LPU voit un contraste si la somme des signaux démodulés est supérieure à un certain seuil et si une LPU voisine voit également un contraste, et enfin si le maximum de la somme est supérieur à un certain seuil. C'est cette supériorité de seuil qui est illustré par l'algorithme de la figure 8a.

L'algorithme de la figure 8a correspond à la recherche de la meilleure LPU, c'est-à-dire celle dont la somme est la plus élevée. Chaque LPU est alors étudiée suivant son « index », c'est-à-dire son numéro. Par exemple l'index 1 correspond à la LPU composée des premières et deuxièmes cellules photosensibles 1041 et 1042. Suivant l'index du LPU présentant la somme la plus grande, cet algorithme permet de l'identifier.

Selon un mode de réalisation, une phase de calibration est nécessaire pour établir une table de correspondance entre la sortie brute de chaque LPU et la position réelle du contraste.

De par la difficulté à connaître avec précision les paramètres optiques des yeux 1130 et de reproduire ces paramètres à l'identique entre chaque yeux 1130, une méthode de calibration a été mise au point. De plus, tous les cellules photosensibles ayant une réponse différente pour une même intensité lumineuse, il est impératif de calibrer avec précision la présente invention.

En effet, en pratique, il est très difficile d'obtenir des propriétés optiques $\Delta\phi$ et $\Delta\rho$ identiques pour chaque cellule photosensible, ce qui rend la réponse de chaque paire différente des autres pour une même barre ou un même front de contraste. De même, la réponse en amplitude des différentes cellules photosensibles varie ce qui entraine une perte de l'insensibilité à la lumière.

La présente invention propose donc un algorithme automatique de calibration permettant de pallier à ce problème et permettant de rendre la sortie fusionnée du capteur parfaitement linéaire.

La procédure est la suivante, il suffit de faire tourner très lentement (la vitesse angulaire $\Omega$ étant définie par l'équation

suivante : $\left(\Omega < \frac{\frac{4}{40}}{\frac{20\Delta\phi}{F_{mod}}}\right)$ ) le capteur optique tourne sur lui-même face au contraste à caractériser. Durant la caractérisation, il faut enregistrer pour chaque LPU le signal démodulé $Ph_{1\,dem}(t)$ et $Ph_{2\,dem}(t)$ ainsi que la position angulaire $\theta(t)$ du contraste par rapport au capteur.

Selon un mode de réalisation particulièrement avantageux, la méthode de calibration est une méthode automatique. Cette méthode consiste à faire fonctionner l'oeil face à un contraste à caractériser. Durant la caractérisation, chaque LPU est enregistrée, ainsi que la position réelle du contraste par rapport à l'oeil.

Ensuite, les étapes suivantes sont effectuées :

- Normalisation des signaux démodulés de façon à obtenir une insensibilité à l'ambiance lumineuse. Pour cela, par exemple, le maximum de chacune des réponses des cellules photosensibles est identifié afin d'en déduire un facteur d'échelle pour la normalisation.
- Calcul du signal de sortie $Si_{LPU}$ de chaque paire.
- Détermination de la paire à sélectionner grâce au critère du détecteur ZSL.
- Calcul du signal de sortie $Si_{LPU}$ filtrée sans retard de chaque paire. Le filtrage sans retard étant effectué grâce à une transformée de Fourier rapide (FFT : Fast Fourier Transform). La fréquence de filtrage coupure $f_c$ correspond à la fréquence la plus élevée permettant d'obtenir une sortie $S_f(t)$ monotone sur la partie où la paire est sélectionnée, il convient donc de :

  ○ Calculer le FFT du signal de sortie, $S_{FFT}(\omega)=FFT(S_{LPU}(t))$
  ○ Filtrer le signal de sortie dans le domaine spectral, $S_{FFT\_f}(\omega)=S_{FFT}(\omega)*1/\sqrt{(1+\omega/\omega_c)}$ avec $\omega=2\pi f$ : le vecteur de fréquence utilisé pour la FFT et $\omega_c=2\pi f_c$
  ○ Repasser dans le domaine temporel, $S\_f(t)=iFFT(S_{FFT\_F}(\omega))$
  ○ Rechercher le minimum local (correspondant au temps t_1) et le maximum local (correspondant au temps t_2) de la caractéristique, pour déterminer les limites de la table.

- Génération de la table de correspondance entre la position mesurée du contraste $S_f(t)$ et sa position réelle $\theta(t)$ en utilisant la précision souhaitée sur la mesur angulaire comme discrétisation spatiale de $\theta(t)$.

$$\text{Table} : [\theta(t_1):\Delta\theta(t):\theta(t_2)] \rightarrow [S_f(t_1):S_f(t_2)]$$

Selon un mode de réalisation servant d'exemple non limitatif, un exemple d'algorithme est illustré par la figure 8a. Le système de détection 1100 comprend n yeux 1130 où n est un multiple de 4 par exemple. La présente invention permet de déterminer la position angulaire de la cible 1112 par rapport au système de détection 1100, c'est à dire l'angle $\psi$ traduisant son orientation selon le lacet, autrement appelé le "cap", l'angle $\Phi$ correspondant à la position angulaire de la cible sur l'axe de roulis et l'angle $\theta$ sur l'axe de tangage, les axes de roulis et de tangage étant orthogonal entre eux et avec l'axe de lacet. Un repère orthonormé $(O,\vec{x},\vec{y},\vec{z})$ est défini tel que O soit le centre du cercle sur lequel sont disposés les n yeux 1130, $\vec{x}$ pointe vers un premier oeil, l'oeil 1, et $\vec{y}$ vers un deuxième oeil : l'oeil n/4. La présente invention permet alors de déduire des mesures locales de chacun des n yeux 1130, la position angulaire du système de détection 1100 par rapport à la cible 1112. Dans cet approche, il est supposé que le système de détection 1100 se situe déjà plus ou moins au-dessus de la cible 1112, c'est à dire que aux moins deux branches distinctes de la cible contrastée 1112 sont visibles par au moins deux yeux 1130 chacune. L'utilisation de b branches impliquent cependant une restriction sur la mesure de l'angle $\psi$, qui ne peut être estimé qu'à un modulo $\left[\frac{\pi}{b}\right]$. Cela découle du fait que les cibles 1112 sont construites par symétrie de rotation, d'angle $\frac{\pi}{b}$.

Selon un mode de réalisation et dans le cas où le système de détection est composé de n yeux 1130, avec n multiple de 4. La détermination de la position angulaire relative du système de détection par rapport à la cible commence par déterminer l'angle de lacet $\psi$, à l'aide de tous les yeux voyant une des branches de la cible 1112. Une fois cet angle déterminé, le cap de la cible 1112 par rapport à celui du système de détection 1100 est calculé, c'est à dire l'indice $\text{Index}_{Cap}$ correspondant à l'oeil 1130 étant le mieux aligné avec la cible 1112. Les angles $\Phi$ et $\theta$ sont déterminés en utilisant les yeux : $\text{Index}_{Cap} + k.\frac{n}{2b}$ où $k \in \mathbb{N}\,|\,1 < k < n/2$. Ainsi la position angulaire du système de détection 1100 par rapport à la cible 1112 peut être déterminée par l'algorithme illustré en figure 8b.

Selon un mode de réalisation, le procédé de détermination de la position angulaire relative du système de détection 1100 par rapport à la cible contrastée comprend les étapes suivantes :

- la détermination de l'angle de lacet $\psi$ en utilisant l'ensemble des yeux 1130 ayant dans leur champ de vision une des branches de la cible contrastée bidimensionnelle.
- la détermination d'un premier oeil 1130 étant le mieux aligné avec la cible 1112
- la détermination des angles $\Phi$ et $\theta$ en utilisant les yeux 1130 aptes à détecter la cible 1112 selon des directions différentes de celle du premier oeil 1130.

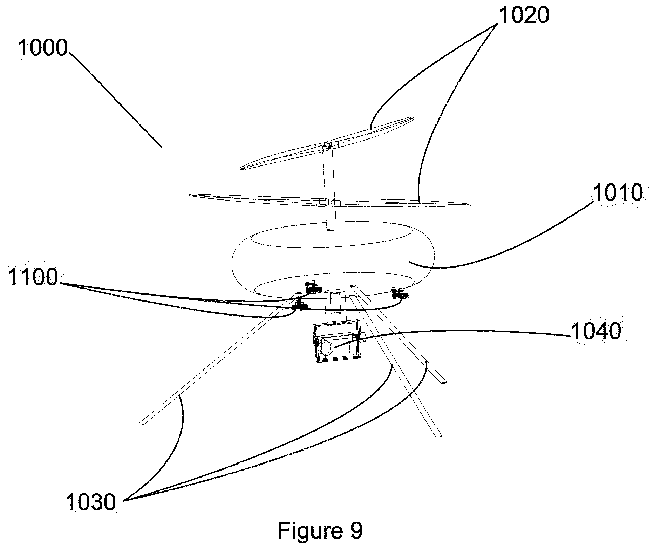

La figure 9 illustre un mode de réalisation de la présente invention dans laquelle un drone comprenant des moyens de déplacement tridimensionnel est équipé de 3 systèmes de détection 1100 comprenant 4 yeux 1130 chacun. Ces 3 systèmes de détection sont disposés uniformément autour d'une caméra 1040 de haute résolution.

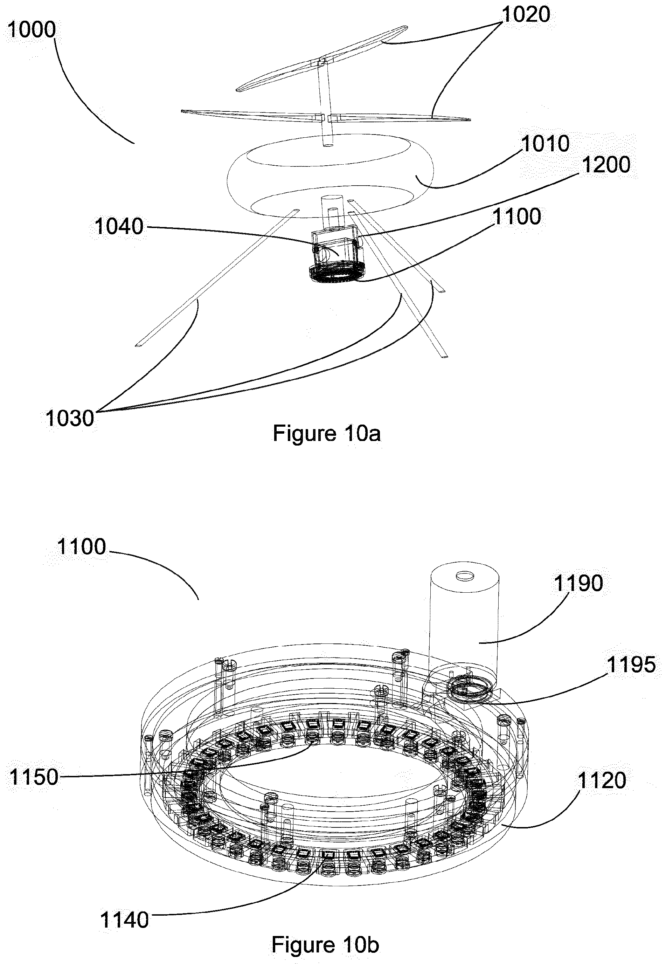

Les figures 10a et 10b illustrent un mode de réalisation de la présente invention particulièrement avantageux.
La figure 10a montre une variante de montage du système de détection 1100 sur un drone 1000 à rotors coaxiaux contrarotatifs. Le système de détection 1100 peut être monté sur une nacelle gyrostabilisée 1200 de manière à ne pas subir les rotations de roulis et de tangage du drone 1000.
La figure 10b montre un exemple de configuration où le système de détection 1100 comprend une multitude d'yeux 1130 montés sur un support où un roulement à bille de grand diamètre autorise une rotation de la pièce supportant les optiques 1150 par rapport à la pièce supportant les capteurs optiques 1140. Ainsi le mécanisme excentrique 1190 permet d'appliquer le même mouvement de micro-balayage optique périodique résultant d'une micro-translation des optiques 1150 par rapport à leurs capteurs optiques 1140 respectives.
La présente invention propose donc, comme il l'a été exposé dans cette description, de déterminer la position relative d'un système de détection 1100 par rapport à une cible contrastée 1112 en utilisant une pluralité d'yeux 1130 et un balayage optique généré par un unique actionneur 1190. Cela permet alors de disposer d'une meilleure synchronisation au niveau des balayages optiques, puisqu'ils sont tous à la même fréquence, une fiabilité accrue car un seul actionneur 1190 est nécessaire par système de détection 1100 et une économie d'énergie conséquente puisque le poids est optimiser, le volume également et enfin le procédé de traitement des signaux ne nécessite pas une consommation importante d'énergie.

Selon un mode de réalisation, la présente invention peut également être utilisée dans le domaine de la robotique mobile comme pour le positionnement de robots par rapport à une cible.

La présente invention permet, par exemple, à un robot mobile 5000 et reposant par gravité sur un support de redresser son cap et de se positionner perpendiculairement à une cible contrastée 5500.

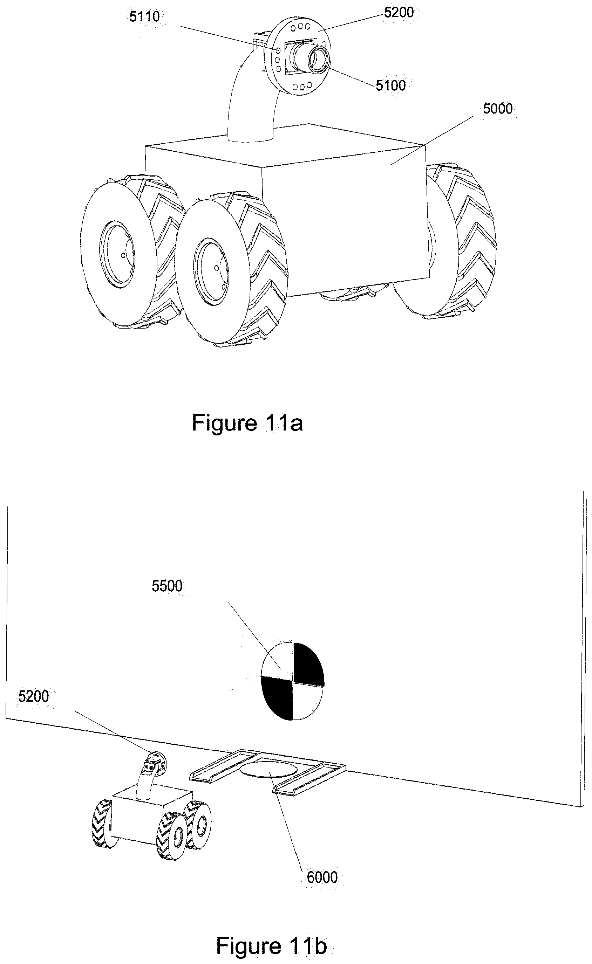

Les figures 11a et 11b montrent un exemple de positionnement d'un robot mobile 5000 équipé d'une caméra 5100 et d'un système de détection 5200 selon la présente invention monté coaxialement par rapport à la caméra 5100 et comprenant des yeux élémentaires 5110. Cette configuration permet au robot mobile 5000 de verrouiller son cap en direction de la cible contrastée 5500. Sur la figure 11b, cette cible contrastée 5500 est un marqueur à quatre quadrants servant de repère pour la localisation de la station de recharge par induction.

Avantageusement, si la cible contrastée 5500 est maintenue centrée dans le champ visuel du système de détection 5200 durant l'approche du robot mobile 5000 holonome ou non holonome grâce à une boucle de rétroaction sur le cap du robot mobile 5000, alors le robot mobile 5000 sera positionné automatiquement avec une grande précision sur la station de recharge 6000.

Le système de détection 5200 selon la présente invention permet de fournir une mesure fine de la position angulaire de la cible contrastée 5500 sans mobiliser de ressource calculatoire supplémentaire et avec très peu de pixels. Le nombre de pixels peut être compris entre 1 et 1000, avantageusement entre 2 et 500, et de préférence être égal à 12.

Pour stopper le robot mobile 5000 au-dessus de la station 6000 de rechargement, un capteur de passage 6100 est situé au-dessus de la station de recharge 6000. Alternativement on prévoit un proximètre, de type Infra-Rouge et/ou UltraSon pour détecter l'approche par rapport au mur où se situe la cible contrastée 5500.

De manière avantageuse, il est possible de disposer deux cibles contrastées séparées d'une distance connue, de manière à mesurer par triangulation la distance du robot mobile 5000 par rapport au plan supportant les cibles contrastées. La figure 4i est un exemple non limitatif de cette situation.

L'invention n'est pas limitée aux modes de réalisations précédemment décrits et s'étend à tous les modes de réalisation couverts par les revendications.

## Revendications

1. Système de détection d'une cible contrastée (1112) présentant au moins une zone de contraste, ledit système de détection (1100) étant **caractérisé en ce que** :

   - il comporte au moins un premier et un deuxième dispositifs optiques (1130) comprenant chacun :

     ◦ au moins une optique (1150) présentant un plan focal, un centre optique (1151) et un axe optique perpendiculaire au plan focal et passant par le centre optique (1151),
     ◦ au moins un capteur optique (1140) comprenant au moins une pluralité de cellules photosensibles (1141, 1142, 1143, 1144, 1145, 1146); ladite au moins une pluralité de cellules photosensibles (1141, 1142, 1143, 1144, 1145, 1146) étant positionnée par rapport à ladite au moins une optique (1150) de manière à ce que les rayons lumineux (1165) transmis par ladite au moins une optique (1150) soient reçus par ladite au moins une pluralité de cellules photosensibles (1141, 1142, 1143, 1144, 1145, 1146) ;

   - les optiques (1150) des au moins premier et deuxième dispositifs optiques (1130) sont solidaires entre elles et sont supportées par un premier support (1122);
   - les capteurs optiques (1140) sont solidaires entre eux et sont supportés par un deuxième support (1121) ;
   - le premier support (1122) et le deuxième support (1121) sont configurés pour être entraînés en rotation relative l'un par rapport à l'autre ;
   - ladite rotation relative est effectuée selon un axe de rotation (1110) parallèle aux axes optiques des optiques (1150) des au moins premier et deuxième dispositifs optiques (1130), l'axe de rotation (1110) étant différent desdits axes optiques des optiques (1150) ;
   - un unique actionneur (1190) est configuré pour générer ladite rotation relative ;
   - ladite rotation relative est effectuée selon un angle de balayage, ledit angle de balayage et la distance (1153) entre le centre optique (1151) des au moins une optique (1150) de chaque dispositif optique (1130) et l'axe de rotation (1110) de ladite rotation relative sont configurés de manière à ce que pour chacun des au moins deux capteurs optiques (1140), au fur et à mesure de ladite rotation relative, pour chaque dispositif optique le centre optique (1151) de l'au moins une optique (1150) associée à l'au moins un capteur optique (1140) effectue un balayage d'une pluralité de cellules photosensibles (1141, 1142, 1143, 1144, 1145, 1146) de l'au moins un capteur optique (1140) ;
- les au moins premier et deuxième dispositifs optiques (1130) sont positionnés par rapport audit axe de rotation (1110) de manière à ce que ledit balayage des centres optiques (1151) des optiques (1150) soit effectué selon une première direction pour l'au moins un premier dispositif optique (1130) et selon une deuxième direction, différente de la première direction, pour l'au moins un deuxième dispositif optique (1130).

2. Système selon la revendication précédente configuré de manière à ce que ladite rotation relative comprenne un mouvement de rotation oscillant de préférence périodique.

3. Système selon la revendication précédente dans lequel l'actionneur (1190) est un moteur à excentrique configuré pour générer ladite rotation relative comprenant un mouvement de rotation oscillant de préférence périodique.

4. Système selon l'une quelconque des revendications précédentes dans lequel les dimensions et la configuration des dispositifs optiques (1130), en particulier la dimension des cellules photosensibles (1142) et la distance entre l'axe de rotation relative (1100) et le centre optique (1151) de l'au moins une optique (1150) sont configurées de manière à ce que chaque capteur optique (1140) perçoive le balayage comme un mouvement de translation.

5. Système selon l'une quelconque des revendications précédentes configuré de manière à ce que la relation qui relie la distance R entre ledit axe de rotation relative et le centre optique (1151) de l'au moins une optique (1150), avec la distance d' parcouru par le centre optique (1151) et avec la distance d séparant deux cellules photosensibles adjacentes de la pluralité de cellules photosensibles (1141, 1142, 1143, 1144, 1145, 1146), lors du balayage d'un capteur optique (1140) par ledit centre optique (1151), est exprimée par l'équation suivante :

$$d' = R tan\left(\frac{d}{R}\right)$$

Et dans lequel R >> d, avantageusement R > k.d avec k=10 et de préférence k=100, de manière à ce que d' ≈ d.

6. Système selon l'une quelconque des revendications précédentes dans lequel, pour au moins un dispositif optique (1130), la pluralité de cellules photosensibles (1141, 1142, 1143, 1144, 1145, 1146) est positionnée en dehors du plan focal de la au moins une optique (1150).

7. Système selon l'une quelconque des revendications précédentes dans lequel les dispositifs optiques (1130) sont répartis autour d'un cercle ou sur un anneau centré sur l'axe de rotation (1110).

8. Système selon l'une quelconque des revendications précédentes dans lequel toutes les cellules photosensibles (1141, 1142, 1143, 1144, 1145, 1146) des dispositifs optiques (1130) sont balayées.

9. Système selon l'une quelconque des revendications précédentes dans lequel une distance sépare l'axe de rotation (1110) des axes optiques.

10. Appareil mobile selon au moins deux directions spatiales comprenant un système de détection selon l'une quelconque des revendications précédentes et configuré pour ajuster sa position suivant au moins les deux directions spatiales en fonction d'une détection opérée par ledit système de détection (1100).

11. Drone comprenant au moins un système de détection selon l'une quelconque des revendications 1 à 9 et configuré pour ajuster sa position spatiale en fonction d'une détection opérée par ledit système de détection (1100).

12. Robot mobile comprenant au moins un système de détection selon l'une quelconque des revendications 1 à 9 et configuré pour ajuster sa position spatiale en fonction d'une détection opérée par ledit système de détection (1100).

13. Ensemble comprenant au moins un appareil selon la revendication 10, ou au moins un drone selon la revendication 11, ou au moins un robot selon la revendication 12, et au moins une cible contrastée (1112), l'appareil, ou le drone, ou le robot, étant configuré pour ajuster sa position spatiale en fonction de sa position relative par rapport à la cible contrastée (1112) détectée par ledit système de détection (1100).

14. Procédé de calibration d'un système de détection selon l'une quelconques des revendications 1 à 9, par rapport à une cible contrastée (1112) comprenant au moins un contraste, ledit procédé comprenant les étapes suivantes mises en oeuvre par ordinateur :

- Détermination d'une pluralité de paires de cellules photosensibles (1141, 1142, 1143, 1144, 1145, 1146) adjacentes pour chaque dispositif optique (1130);
- Filtrage d'un signal de sortie S de chacune desdites paires de la pluralité de paires de cellules photosensibles (1141, 1142, 1143, 1144, 1145, 1146) adjacentes;

le procédé comprenant également les étapes suivantes :

- Pour une pluralité de positions connues du système de détection par rapport au contraste, enregistrement de la dite position connue et du signal de sortie S filtré de chacune desdites paires de la pluralité de paires de cellules photosensibles (1141, 1142, 1143, 1144, 1145, 1146) adjacentes correspondant à ladite position connue.
- Génération d'une table de correspondance entre la position connue du système de détection par rapport au contraste et le signal de sortie S filtré de chacune desdites paires de la pluralité de paires de cellules photosensibles (1141, 1142, 1143, 1144, 1145, 1146) adjacentes correspondant à ladite position connue.

15. Procédé de détermination de la position d'un système de détection selon l'une quelconques des revendications 1 à 9, par rapport à une cible contrastée (1112) comportant un contraste, en utilisant une table de correspondance générée par le procédé de calibration selon la revendication précédente, le procédé comprenant les étapes suivantes mises en oeuvre par ordinateur :

- Détermination d'une pluralité de paires de cellules photosensibles (1141, 1142, 1143, 1144, 1145, 1146) adjacentes pour chaque dispositif optique (1130);
- Filtrage d'un signal de sortie S de chacune desdites paires de la pluralité de paires de cellules photosensibles (1141, 1142, 1143, 1144, 1145, 1146) adjacentes;

le procédé comprenant également les étapes suivantes :

- Mesure d'un signal de sortie S filtré de chacune des paires de la pluralité de paires de cellules photosensibles (1141, 1142, 1143, 1144, 1145, 1146) adjacentes;
- Lecture dans la table de correspondance de la position du système de détection par rapport au contraste correspondant audit signal S filtré et mesuré.

**Patentansprüche**

1. System zum Detektieren eines kontrastierten Ziels (1112), das mindestens einen Kontrastbereich aufweist, wobei das Detektionssystem (1100) **dadurch gekennzeichnet ist, dass**

- es mindestens eine erste und eine zweite optische Vorrichtung (1130) umfasst, die jede umfassen:

o mindestens eine Optik (1150), die eine Brennebene, einen optischen Mittelpunkt (1151) und eine optische Achse aufweist, die zur Brennebene senkrecht ist und durch den optischen Mittelpunkt (1151) verläuft,
o mindestens einen optischen Sensor (1140), der mindestens eine Vielzahl von lichtempfindlichen Zellen (1141, 1142, 1143, 1144, 1145, 1146) umfasst;

wobei die mindestens eine Vielzahl von lichtempfindlichen Zellen (1141, 1142, 1143, 1144, 1145, 1146) in Bezug auf die mindestens eine Optik (1150) so positioniert ist, dass die Lichtstrahlen (1165), die durch die mindestens eine Optik (1150) übertragen werden, von der mindestens einen Vielzahl von lichtempfindlichen Zellen (1141, 1142, 1143, 1144, 1145, 1146) empfangen werden;
- die Optiken (1150) der mindestens ersten und zweiten optischen Vorrichtung (1130) fest miteinander verbunden sind und von einem ersten Träger (1122) getragen werden;
- die optischen Sensoren (1140) fest miteinander verbunden sind und von einem zweiten Träger (1121) getragen werden;

- der erste Träger (1122) und der zweite Träger (1121) dafür konfiguriert sind, in relativer Drehung zueinander angetrieben zu werden;
- die relative Drehung um einer Drehachse (1110) erfolgt, die zu den optischen Achsen der Optiken (1150) der mindestens ersten und zweiten optischen Vorrichtung (1130) parallel ist, wobei sich die Drehachse (1110) von den optischen Achsen der Optiken (1150) unterscheidet;
- ein einzelner Aktor (1190) dafür konfiguriert ist, die relative Drehung zu erzeugen;
- die relative Drehung in einem Abtastwinkel erfolgt, wobei der Abtastwinkel und die Distanz (1153) zwischen dem optischen Mittelpunkt (1151) der mindestens einen Optik (1150) jeder optischen Vorrichtung (1130) und der Drehachse (1110) der relativen Drehung so konfiguriert sind, dass bei jedem der mindestens zwei optischen Sensoren (1140) im Zuge der relativen Drehung bei jeder optische Vorrichtung der optische Mittelpunkt (1151) der mindestens einen Optik (1150), die dem mindestens einen optischen Sensor (1140) zugeordnet ist, eine Abtastung einer Vielzahl von lichtempfindlichen Zellen (1141, 1142, 1143, 1144, 1145, 1146) des mindestens einen optischen Sensors (1140) vornimmt;
- die mindestens erste und zweite optische Vorrichtung (1130) in Bezug auf die Drehachse (1110) so positioniert sind, dass die Abtastung der optischen Mittelpunkte (1151) der Optiken (1150) bei der mindestens einen ersten optischen Vorrichtung (1130) in einer ersten Richtung, und bei der mindestens einen zweiten optischen Vorrichtung (1130) in einer zweiten Richtung erfolgt, die sich von der ersten Richtung unterscheidet.

2. System nach dem vorstehenden Anspruch, das so konfiguriert ist, dass die relative Drehung eine vorzugsweise periodisch oszillierende Drehbewegung umfasst.

3. System nach dem vorstehenden Anspruch, wobei der Aktor (1190) ein Exzentermotor ist, der dafür konfiguriert ist, die relative Drehung zu erzeugen, die eine vorzugsweise periodisch oszillierende Drehbewegung umfasst.

4. System nach einem der vorstehenden Ansprüche, wobei die Abmessungen und die Konfiguration der optischen Vorrichtungen (1130), insbesondere die Abmessungen der lichtempfindlichen Zellen (1142) und die Distanz zwischen der relativen Drehachse (1100) und dem optischen Mittelpunkt (1151) der mindestens einen Optik (1150) so konfiguriert sind, dass jeder optische Sensor (1140) die Abtastung als eine Translationsbewegung wahrnimmt.

5. System nach einem der vorstehenden Ansprüche, das so konfiguriert ist, dass die Beziehung, die die Distanz R zwischen der relativen Drehachse und dem optischen Mittelpunkt (1151) der mindestens einen Optik (1150) mit der vom optischen Mittelpunkt (1151) zurückgelegten Distanz d' und mit der Distanz d verbindet, welche zwei benachbarte lichtempfindliche Zellen aus der Vielzahl von lichtempfindlichen Zellen (1141, 1142, 1143, 1144, 1145, 1146) bei der Abtastung eines optischen Sensors (1140) durch den optischen Mittelpunkt (1151) trennt, durch die folgende Gleichung ausgedrückt wird:

$$d' = Rtan\left(\frac{d}{R}\right)$$

und wobei R >> d, vorteilhafterweise R > k.d, wobei k=10 und vorzugsweise k=100, sodass d' ≈ d.

6. System nach einem der vorstehenden Ansprüche, wobei bei mindestens einer optischen Vorrichtung (1130) die Vielzahl von lichtempfindlichen Zellen (1141, 1142, 1143, 1144, 1145, 1146) außerhalb der Brennebene der mindestens einen Optik (1150) positioniert sind.

7. System nach einem der vorstehenden Ansprüche, wobei die optischen Vorrichtungen (1130) um einen Kreis oder auf einem Ring verteilt sind, der auf der Drehachse (1110) zentriert ist.

8. System nach einem der vorstehenden Ansprüche, wobei alle die lichtempfindlichen Zellen (1141, 1142, 1143, 1144, 1145, 1146) der optischen Vorrichtungen (1130) abgetastet werden.

9. System nach einem der vorstehenden Ansprüche, wobei eine Distanz die Drehachse (1110) von den optischen Achsen trennt.

10. In mindestens zwei räumlichen Richtungen bewegliches Gerät, das ein Detektionssystem nach einem der vorstehenden Ansprüche umfasst und dafür konfiguriert ist, seine Position gemäß mindestens den zwei räumlichen Richtungen in Abhängigkeit von einer Detektion anzupassen, die vom Detektionssystem (1100) vollzogen wird.

11. Drohne, die mindestens ein Detektionssystem nach einem der Ansprüche 1 bis 9 umfasst und dafür konfiguriert ist, ihre räumliche Position in Abhängigkeit von einer Detektion anzupassen, die vom Detektionssystem (1100) vollzogen wird.

12. Beweglicher Roboter, der mindestens ein Detektionssystem nach einem der Ansprüche 1 bis 9 umfasst und dafür konfiguriert ist, seine räumliche Position in Abhängigkeit von einer Detektion anzupassen, die vom Detektionssystem (1100) vollzogen wird.

13. Baugruppe, die mindestens ein Gerät nach Anspruch 10, oder mindestens eine Drohne nach Anspruch 11, oder mindestens einen Roboter nach Anspruch 12, und mindestens ein kontrastiertes Ziel (1112) umfasst, wobei das Gerät oder die Drohne oder der Roboter dafür konfiguriert sind, ihre räumliche Position in Abhängigkeit von ihrer relativen Position in Bezug auf das vom Detektionssystem (1100) detektierte kontrastierte Ziel (1112) anzupassen.

14. Verfahren zum Kalibrieren eines Detektionssystems nach einem der Ansprüche 1 bis 9 in Bezug auf ein kontrastiertes Ziel (1112), das mindestens einen Kontrast umfasst, wobei das Verfahren die folgenden computerimplementierten Schritte umfasst:

  - Bestimmen einer Vielzahl von Paaren benachbarter lichtempfindlicher Zellen (1141, 1142, 1143, 1144, 1145, 1146) für jede optische Vorrichtung (1130);
  - Filtern eines Ausgangssignals S jedes der Paare aus der Vielzahl von Paaren benachbarter lichtempfindlicher Zellen (1141, 1142, 1143, 1144, 1145, 1146);

wobei das Verfahren ebenfalls die folgenden Schritte umfasst:

  - für eine Vielzahl von bekannten Positionen des Detektionssystems in Bezug auf den Kontrast, Aufzeichnen der bekannten Position und des gefilterten Ausgangssignals S jedes der Paare aus der Vielzahl von Paaren benachbarter lichtempfindlicher Zellen (1141, 1142, 1143, 1144, 1145, 1146), das der bekannten Position entspricht.
  - Erzeugen einer Entsprechungstabelle zwischen der bekannten Position des Detektionssystems in Bezug auf den Kontrast und dem gefilterten Ausgangssignal S jedes der Paare aus der Vielzahl von Paaren benachbarter lichtempfindlicher Zellen (1141, 1142, 1143, 1144, 1145, 1146), das der bekannten Position entspricht.

15. Verfahren zum Bestimmen der Position eines Detektionssystems nach einem der Ansprüche 1 bis 9 in Bezug auf ein kontrastiertes Ziel (1112), das einen Kontrast umfasst, unter Verwendung einer über das Kalibrierungsverfahren nach dem vorstehenden Anspruch erzeugten Entsprechungstabelle, wobei das Verfahren die folgenden computerimplementierten Schritte umfasst:

  - Bestimmen einer Vielzahl von Paaren benachbarter lichtempfindlicher Zellen (1141, 1142, 1143, 1144, 1145, 1146) für jede optische Vorrichtung (1130);
  - Filtern eines Ausgangssignals S jedes der Paare aus der Vielzahl von Paaren benachbarter lichtempfindlicher Zellen (1141, 1142, 1143, 1144, 1145, 1146);

wobei das Verfahren ebenfalls die folgenden Schritte umfasst:

  - Messen eines gefilterten Ausgangssignals S jedes der Paare aus der Vielzahl von Paaren benachbarter lichtempfindlicher Zellen (1141, 1142, 1143, 1144, 1145, 1146);
  - Auslesen, aus der Entsprechungstabelle, der Position des Detektionssystems in Bezug auf den Kontrast, die dem gefilterten und gemessenen Signal S entspricht.

**Claims**

1. System for detecting a contrasted target (1112) having at least one contrast zone, said detection system (1100) being **characterised in that**:

  - it comprises at least one first and one second optical device (1130), each comprising:

o at least one optic (1150) having a focal plane, an optical center (1151) and an optical axis perpendicular to the focal plane and passing through the optical center (1151),
o at least one optical sensor (1140) comprising at least one plurality of photosensitive cells (1141, 1142, 1143, 1144, 1145, 1146); said at least one plurality of photosensitive cells (1141, 1142, 1143, 1144, 1145, 1146) being positioned with respect to said at least one optic (1150) such that the light beams (1165) transmitted by said at least one optic (1150) are received by said at least one plurality of photosensitive cells (1141, 1142, 1143, 1144, 1145, 1146);

- the optics (1150) of the at least one first and second optical devices (1130) are secured to one another and are supported by a first support (1122);
- the optical sensors (1140) are secured to one another and are supported by a second support (1121);
- the first support (1122) and the second support (1121) are configured to be driven in rotation relative against one another;
- said relative rotation is made along an axis of rotation (1110) parallel to the optical axes of the optics (1150) of the at least first and second optical devices (1130), the axis of rotation (1110) being different from said optical axes of the optics (1150);
- one single actuator (1190) is configured to generate said relative rotation;
- said relative rotation is made along a scanning angle, said scanning angle and the distance (1153) between the optical center (1151) of the at least one optic (1150) of each optical device (1130) and the axis of rotation (1110) of said relative rotation are configured such that for each of the at least two optical sensors (1140), as said relative rotation, for each optical device, the optical center (1151) of the at least one optic (1150) associated with the at least one optical sensor (1140) scans a plurality of photosensitive cells (1141, 1142, 1143, 1144, 1145, 1146) of the at least one optical sensor (1140);
- the at least first and second optical devices (1130) are positioned with respect to said axis of rotation (1110) such that said scanning of the optical centers (1151) of the optics (1150) are made along a first direction for the at least one optical device (1130) and along a second direction, different from the first direction, for the at least one second optical device (1130).

2. System according to the preceding claim, configured such that said relative rotation comprises an oscillating rotational movement, preferably periodic.

3. System according to the preceding claim, wherein the actuator (1190) is an eccentric motor configured to generate said relative rotation comprising an oscillating rotational movement, preferably periodic.

4. System according to any one of the preceding claims, wherein the dimensions and the configuration of the optical devices (1130), in particular the dimension of the photosensitive cells (1142) and the distance between the axis of relative rotation (1100) and the optical center (1151) of the at least one optic (1150) are configured such that each optical sensor (1140) detects the scanning as a translation movement.

5. System according to any one of the preceding claims, configured such that the ratio which connects the distance R between said axis of relative rotation and the optical center (1151) of the at least one optic (1150), with the distance d' travelled by the optical center (1151) and with the distance d separating two adjacent photosensitive cells of the plurality of photosensitive cells (1141, 1142, 1143, 1144, 1145, 1146), during the scanning of an optical sensor (1140) by said optical center (1151), is expressed by the following equation:

$$d' = R\tan\left(\frac{d}{R}\right)$$

And wherein R >> d, advantageously, R > k.d. with k=10 and preferably k=100, such that d' ≈ d.

6. System according to any one of the preceding claims, wherein, for at least one optical device (1130), the plurality of photosensitive cells (1141, 1142, 1143, 1144, 1145, 1146) is positioned outside of the focal plane of the at least one optic (1150).

7. System according to any one of the preceding claims, wherein the optical devices (1130) are distributed around a circle or on a ring centred on the axis of rotation (1110).

8. System according to any one of the preceding claims, wherein all the photosensitive cells (1141, 1142, 1143, 1144, 1145, 1146) of the optical devices (1130) are scanned.

9. System according to any one of the preceding claims, wherein a distance separates the axis of rotation (1110) of the optical axes.

10. Mobile device according to at least two spatial directions comprising a detection system according to any one of the preceding claims and configured to adjust the position thereof along at least the two spatial directions according to a detection operated by said detection system (1100).

11. Drone comprising at least one detection system according to any one of claims 1 to 9 and configured to adjust the spatial position thereof according to a detection operated by said detection system (1100).

12. Mobile robot comprising at least one detection system according to any one of claims 1 to 9 and configured to adjust the spatial position thereof according to a detection operated by said detection system (1100).

13. Assembly comprising at least one device according to claim 10, or at least one drone according to claim 11, or at least one robot according to claim 12, and at least one contrasted target (1112), the device, or the drone, or the robot, being configured to adjust the spatial position thereof according to the relative position thereof with respect to the contrasted target (1112) detected by said detection system (1100).

14. Method for calibrating a detection system according to any one of claims 1 to 9, with respect to a contrasted target (1112) comprising at least one contrast, said method comprising the following steps implemented by computer:

- Determination of a plurality of pairs of adjacent photosensitive cells (1141, 1142, 1143, 1144, 1145, 1146) for each optical device (1130);
- Filtering of an output signal S of each of said pairs of the plurality of pairs of adjacent photosensitive cells (1141, 1142, 1143, 1144, 1145, 1146);

the method also comprising the following steps:

- For a plurality of known positions of the detection system with respect to the contrast, recording and said known position and of the filtered output signal S of each of said pairs of the plurality of pairs of adjacent photosensitive cells (1141, 1142, 1143, 1144, 1145, 1146) corresponding to said known position;
- Generation of a correspondence table between the known position of the detection system with respect to the contrast and the filtered output signal S of each of said pairs of the plurality of pairs of adjacent photosensitive cells (1141, 1142, 1143, 1144, 1145, 1146) corresponding to said known position.

15. Method for determining the position of a detection system according to any one of claims 1 to 9, with respect to a contrasted target (1112) comprising a contrast, by using a correspondence table generated by the calibration method according to the preceding claim, the method comprising the following steps implemented by computer:

- Determination of a plurality of pairs of adjacent photosensitive cells (1141, 1142, 1143, 1144, 1145, 1146) for each optical device (1130);
- Filtering of an output signal S of each of said pairs of the plurality of pairs of adjacent photosensitive cells (1141, 1142, 1143, 1144, 1145, 1146);

the method also comprising the following steps:

- Measuring of an filtered output signal S of each of the pairs of the plurality of pairs of adjacent photosensitive cells (1141, 1142, 1143, 1144, 1145, 1146);
- Reading in the correspondence table of the position of the detection system with respect to the contrast corresponding to said filtered and measured signal S.

Figure 1a

Figure 1b

1130

1100

1110

1141, 1142,
1143, 1144,
1145, 1146

1140

1150

1120

Figure 2a

1120

1122

1150

1121

1110

1100

1140

Figure 2b

Figure 3a

Figure 3b

1112

1112

1112

1112

Figure 4a

Figure 4b

Figure 4c

Figure 4d

1112

Figure 4e

1112

Figure 4g

1112

Figure 4f

1112

Figure 4h

1112

Ligne 1

A          B

L

D          C

Ligne 2

Figure 4i

1131b
$\bar{\epsilon}_{r_2}$

1111                    1112                    1132

$\bar{\epsilon}_{r_1}$              $\bar{\epsilon}_{r_3}$

1153

1131a
1110
1130                              1131c

$\bar{\epsilon}_{r_4}$

1131d

1100                    1130

Figure 4j                    Figure 4k

Figure 5a

Figure 5b

Figure 6a

Figure 6b

Figure 6c

1141

1153

1140

1110

1155

1154

Figure 6d

Convertisseur
courant-tension

Filtre
passe-bande

C1
10pF

R1
100kΩ

Vcc

$i_{PhD}$

−

+

$V_{réf}$

OPA4348

$V_{PhD}$

C2
2.2μF

R2
2.49kΩ

C3
15nF

R3
160kΩ

Vcc

−

+

$V_{réf}$

OPA4348

$Vf_{PhD}$

Figure 7a

Figure 7b

Figure 7c

Figure 7d

Figure 7e

Figure 7f

Figure 7g

Figure 7h

Figure 7i

Figure 7j

**5000**

$\Sigma PhD_{1,2}$   $\Sigma PhD_{2,3}$   ...   $\Sigma PhD_{n-1,n}$

**5100**

| IndexMax ← Trouve Maximum |
| --- |

**5200**     **5300**     **5400**

**si** IndexMax=1     **si** IndexMax=$n$     **sinon**

| $\Sigma PhD[\text{IndexMax}](t) < S1 + S2$ **ou** $\Sigma PhD[\text{IndexMax}+1](t) < S1 + S2$ | **non** | $\Sigma PhD[\text{IndexMax}](t) < S1 + S2$ **ou** $\Sigma PhD[\text{IndexMax}-1](t) < S1 + S2$ | **non** | $\Sigma PhD[\text{IndexMax}+1](t) < S1$ **ou** $\Sigma PhD[\text{IndexMax}-1](t) < S1$ | **non** |
| --- | --- | --- | --- | --- | --- |

**oui**     **oui**     **oui**

| ZSL(t) ← IndexMax |
| --- |

| ZSL(t) ← 0 |
| --- |

**5500**     **5600**

## Figure 8a

4000

**4100**

$$
\begin{array}{c}
\textbf{Initialisation:} \\
Moy_{\bar\psi} \leftarrow 0 \\
n_{\bar\psi} \leftarrow 0 \\
i \leftarrow 1
\end{array}
$$

**4200**

**non**

$$ZSL(i) > 0 \text{ et } ZSL(i + n/2) > 0$$

**4300**

**oui**

**Calcul lacet:**

Mesure locale:

$$\bar\psi \leftarrow \tan^{-1}\left( \frac{D.\tan\left(\bar\epsilon_r(i) - \epsilon_r(i+n/2)\right)}{r_c} \right) + \beta.\frac{i-1}{n} \bmod \pi/2$$

Lacet fusionn:

$$Moy_{\bar\psi} \leftarrow \frac{Moy_{\bar\psi}.n_{\bar\psi} + \bar\psi}{n_{\bar\psi} + 1}$$

**4400**

$$
\begin{array}{c}
n_{\bar\psi} \leftarrow n_{\bar\psi} + 1 \\
i \leftarrow i + 1
\end{array}
$$

**sinon**

**si IndexMax=1**

**Sélection oeils à fusionner:**

$$Index_{Cap} \leftarrow \text{arrondi}\left( \frac{\bar\psi}{\beta} \right) \bmod n$$

$$Index_{CapOpp} \leftarrow \left( Index_{Cap} + \frac{n}{2} \right) \bmod n$$

$$Index_{CapOrtG} \leftarrow Index_{Cap} + \frac{n}{4}$$

$$Index_{CapOrtD} \leftarrow Index_{Cap} + \frac{3n}{4}$$

**4500**

**Calcul roulis et tangage:**

$$\bar\phi \leftarrow \frac{1}{2}\left( \epsilon_r(IndexCap) + \epsilon_r(IndexCapOpp) \right)$$

$$\bar\theta \leftarrow \frac{1}{2}\left( \epsilon_r(Index_{CapOrtG}) + \epsilon_r(Index_{CapOrtD}) \right)$$

**4600**

## Figure 8b

Figure 9

Figure 10a

Figure 10b

Figure 11a

Figure 11b

**EP 3 292 374 B1**

## RÉFÉRENCES CITÉES DANS LA DESCRIPTION

**Documents brevets cités dans la description**

- WO 2005111536 A1